# EUROPEAN PATENT APPLICATION

(11) **EP 1 156 629 A1**
(43) Date of publication of application: **21.11.2001**
(21) Application number: 00905317.4
(22) Date of filing: 24.02.2000
(51) Int. Cl.: H04L 12/56

(54) **NETWORK SYSTEM AND COMMUNICATION NODE**

(30) Priority: 25.02.1999 JP 4759699
(71) Applicant: Hitachi, Ltd., Chiyoda-ku, Tokyo 101-8010 (JP)
(72) Inventor: TAKADA, Osamu Systems Development Laboratory, Kawasaki-shi, Kan agawa 215-0013 (JP); IKEDA, Naoya Server & Network Development, Ebina-shi, Kanagawa 243-0435 (JP); MIMURA, Itaru Central Research Laboratory, Kokubunji-shi, Tokyo 185-8601 (JP); KUROSAKI, Yoshiyuki, Software Division, Yokohama-shi, Kanagawa 244-0003 (JP); NISHIKADO, Takashi Systems Development Laboratory, Kawasaki-shi, Kanagawa 215-0013 (JP); MIYAKE, Shigeru, Systems Development Laboratory, Kawasaki-shi, Kanagawa 215-0013 (JP)
(74) Representative: Strehl Schübel-Hopf & Partner
(86) International application number: JP0001066
(87) International publication number: WO0051297

(57) **Abstract**

A communication proxy apparatus is provided which provides a capability of quickly accessing the latest data with a cache and performing a fast access control by a simple indication in response to the request for accessing the data without changing a server device and a client device. The communication proxy apparatus further includes individual action control apparatus of explicitly specifying ID information of said data for the specific data or conditionally indicating execution of an action by adding an individual action tag to the data given back from another apparatus together with the data and distributive access managing apparatus of recording accesses to the specific data by using said control apparatus, executing the indicated process to the communication proxy having accessed said data, and collecting the execution results and giving them back.

## Description

### TECHNICAL FIELD

The present invention relates to a communication network, and more particularly to a method of controlling and managing a network system for transferring IP (Internet Protocol) packets and processing packet data.

### BACKGROUND ART

As a router that is one component of the Internet communication infrastructure, there have been developed the conventional best-effort type packet transfer technology as well as a new QoS (Quality of Service) guaranteeing type packet transfer technology. The technology on design of the router is described in (A) IEEE Communications Magazine, May 1998, pp. 144-151, "Issues and Trends in Router Design" by S. Keshav et al.

In particular, the technology on the QoS guaranteeing type packet transfer is described in (B) IEEE Communications Magazine, May 1998, pp. 152 to 163, "Beyond Best Effort: Router Architectures for the Differentiated Services of Tomorrow's Internet", by Vijay Kumar, et al., for example. Further, the technology on the Internet-related control software or protocol is described in (C) "TCP/IP illustrated," Vol.1 The protocols and Vol.2 Implementation, by Stevens, W.Richard, Addison Wesley, 1997, for example.

On the other hand, as to the technology on control and management of an overall network system including a plurality of routers/switches, transmitters, a network managing device, and servers, in particular, the technology of making the network programmable, the related technology is described in (D) the feature story "Programmable Networks" of IEEE Communications Magazine, October 1998.

In the feature story, especially, these two articles describe the technology, that is, (E) pp. 42 to 53, "The Tempest: A Framework for Safe, Resource-Assured, Programmable Networks," by Sean Rooney, et al. and (F) pp. 54 to 62, "Programmable Transport Architecture with QoS Guarantees," by J. Huard et al.

As the internet is becoming large in scale and prevailing, a new request has risen for setting a dynamically QoS-guaranteed communication path between one end and another one on the basis of the administration policy without through a plurality of administration managing organizations (network domains) or for providing a QoS-guaranteed video conference service on the Internet.

Of the foregoing routers, there have been already provided a router having a function of performing bandwidth control, priority control and discard control for guaranteeing the QoS. However, no means are not provided for some services, for example, setting the dynamically QoS-guaranteed communication path between the ends, more particularly, reserving the QoS-guaranteed communication path by specifying a timing or setting it up promptly. Moreover, no means are not provided for supplying the service of setting the QoS-guaranteed communication path over a plurality of managing organizations (domains).

Further, the foregoing router has a function of transferring packets but does not have a function of processing packet data. Hence, for example, the router disables to perform the coding rule conversion of moving picture data included in the packets. Moreover, the foregoing function of controlling and managing the network is intended to the control and management of the so-called communicating device such as a router or a switch. It means that the function is not intended to the fire wall function, the function of aiding in the video conference (mixing, coding rule conversion and so forth of the moving picture data) and the control and management of the devices. Hence, when a network provides the QoS-guaranteed video conference service, disadvantageously, the most appropriate resource management (reserving the QoS-guaranteed path and the function in aiding in the video conference, and so forth). In addition, no means are not provided for supplying these new services quickly, that is, a programmable network on the basis of the administration policy.

### DISCLOSURE OF THE INVENTION

It is an object of the present invention to provide (1) a router having means of processing data (referred to as a communication node), (2) means of making the network programmable for providing a new service quickly, (3) means of setting a dynamically QoS-guaranteed communication path between the ends on the basis of the administration policy, (4) means of allowing the communication path set by (3) to cover a plurality of managing organizations (domains), and (5) means of performing the most appropriate resource management (reserving the QoS-guaranteed path and the function in aiding in the video conference, and so forth).

In carrying out the foregoing object, the present invention provides (1) a communication node characterized in including means of processing data and means of analyzing inputted packets and transferring the result to the data processing means. The present invention also provides (2) a network system characterized by including means of dynamically downloading a service-implementing function (software) to the communication nodes, the servers and so forth composing the network on the basis of the service request and the administration policy.

The present invention also provides (3) a network system characterized in including means of pre-reserved-type resource management and means of on-demand-type resource management. More particularly, the present invention provides means of pre-reserved-type resource management and means of on-demand-type resource management for implementing the most appropriate resource management (reserving the QoS-guaranteed path and the function of aiding in the video conference, and so forth) in response to the service request for requesting different kinds of resources of the communication like the QoS-guaranteed video conference and the data processing.

(4) The present invention also provides a network system characterized in including means of arbitrating the organizations for setting the QoS-guaranteed path over a plurality of managing organizations (domains).

(5) The present invention also provides a network system characterized in including means of managing a service in response to the service request for requesting different kinds of resources of the communications like the QoS-guaranteed video conference service and the data processing.

### BRIEF DESCRIPTION OF THE DRAWINGS

Fig. 1 is a diagram showing a configuration of a network system to which the present invention applies;
Fig. 2 is a block diagram showing an arrangement of a communication node to which the present invention applies;
Fig. 3 is a block diagram showing an arrangement of a transfer processing unit of the communication node to which the present invention applies;
Fig. 4 is a block diagram showing an arrangement of a managing unit of the communication node to which the present invention applies;
Fig. 5 is a block diagram showing an arrangement of a service processing unit of the communication node to which the present invention applies;
Fig. 6 is a block diagram showing an arrangement of an external service processing unit of the communication node to which the present invention applies;
Fig. 7 is a block diagram showing an arrangement of an NMS, a control server, and an ES to which the present invention applies;
Figs. 8A and 8B are views showing compositions of a packet to which the present invention applies;
Fig. 9 is a view showing a composition of a tagged packet that passes the internal switch of the communication node to which the present invention applies;
Fig. 10 is a block diagram showing an arrangement of an upward transfer control unit of the communication node to which the present invention applies;
Fig. 11 is a block diagram showing an arrangement of a downward transfer control unit of the communication node to which the present invention applies;
Fig. 12 is a view showing a composition of upward and downward pattern matching tables of the communication node to which the present invention applies;
Fig. 13 is a view showing a composition of a path control table of the communication node to which the present invention applies;
Fig. 14 is a view showing a composition of an address conversion table of the communication node to which the present invention applies;
Fig. 15 is a flowchart showing a first processing sequence of the upward transfer control unit of the communication node to which the present invention applies;
Fig. 16 is a flowchart showing a second processing sequence of the upward transfer control unit of the communication node to which the present invention applies;
Fig. 17 is a flowchart showing a third processing sequence of the upward transfer control unit of the communication node to which the present invention applies;
Fig. 18 is a flowchart showing a first processing sequence of the downward transfer control unit of the communication node to which the present invention applies;
Fig. 19 is a flowchart showing a second processing sequence of the downward transfer control unit of the communication node to which the present invention applies;
Fig. 20 is a flowchart showing a third processing sequence of the downward transfer control unit of the communication node to which the present invention applies;
Fig. 21 is a block diagram showing an arrangement of software of a network system to which the present invention applies;
Fig. 22 is a block diagram showing an arrangement of a function of administrating and managing the system to which the present invention applies;
Fig. 23 is a view showing a composition of a UDB to which the present invention applies;
Fig. 24 is a view showing a composition of a PDB to which the present invention applies;
Fig. 25 is a view showing a composition of an SDB to which the present invention applies;
Fig. 26 is a view showing a composition of a CDB to which the present invention applies;
Fig. 27 is a block diagram showing arrangements of a function of managing a service and a function of controlling a network;
Fig. 28 is a block diagram showing an arrangement of a function of controlling the communication node to which the present invention applies;
Fig. 29 is a block diagram showing an arrangement of a function of pre-reserved-type resource management to which the present invention applies;
Fig. 30 is a block diagram showing an arrangement of a function of on-demand-type resource management to which the present invention applies;
Fig. 31 is a block diagram showing an arrangement of a function of arbitrating organizations to which the present invention applies; and
Fig. 32 is a view showing a processing sequence of the function of arbitrating organizations to which the present invention applies.

### BEST MODE OF CARRYING OUT THE INVENTION

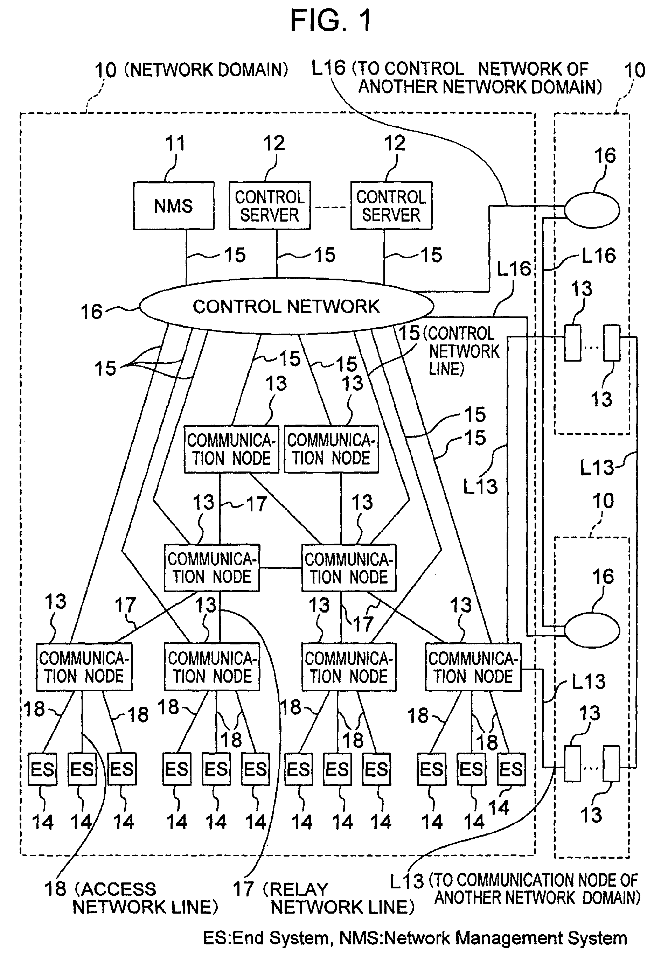

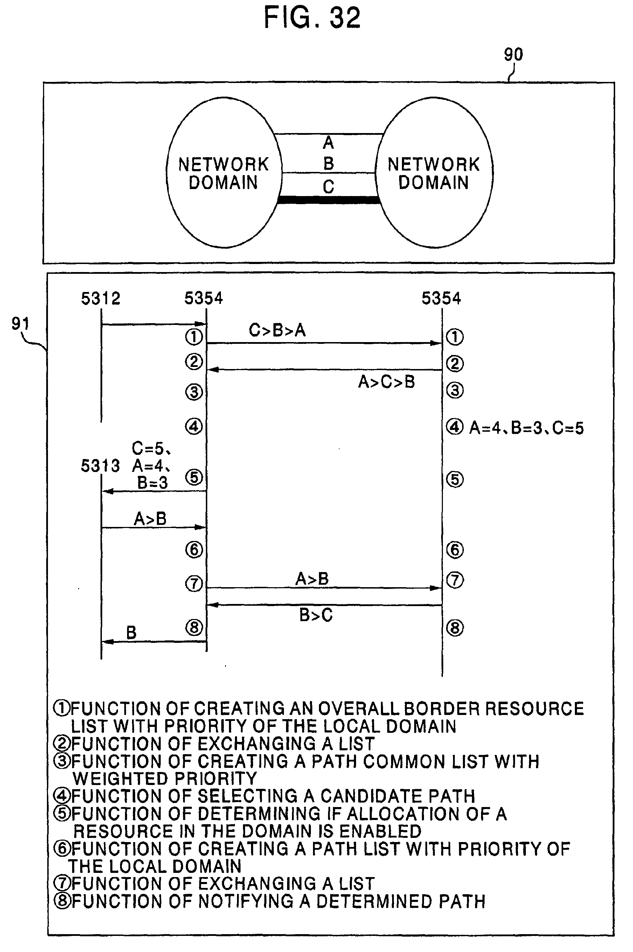

The first embodiment of the present invention will be described with reference to Figs. 1 to 32.

Fig. 1 is a diagram showing a configuration of a network system to which the present invention applies. The present system includes a plurality of network domains 10. The network domain 10 has an NMS (Network Management System) 11, control services 12, communication nodes 13, ES's (End System) 14 served as a PC terminal or a server unit, control networks 16 used for connecting the NMS 11, the control server 12 and the communication node 13 with one another and controlling and managing the network located in the network domain 10, relay network lines 17 each for connecting the communication nodes 13 with each other, and access network lines 18, each of which is located between the communication. The number of the control server 12, the communication node 13 and the ES 14 may be plural.

Between the network domains 10 is connected a line L16 for connecting the control networks 16 with each other and a line L13 for connecting the communication nodes 13 with each other. The control network 16, the relay network line 17, the access network line 18, the line L16, and the line L13 are LANs (Local Area Network) and WANs (Wide Area Network) such as IEEE802 CSMA/CD, ATM, and SONET/SDH. Each of them may be realized by the LAN switch, the ATM switch, an SONET/SDH transmitter and the line medium (metal cable, optical fiber, and so forth). The components described above serve to perform the IP (Internet Protocol)-based communication. For example, each component has an IP address according to Ipv4 or Ipv6 and serves to communicate IP packets with another component.

### [Description on the arrangement and operation of hardware]

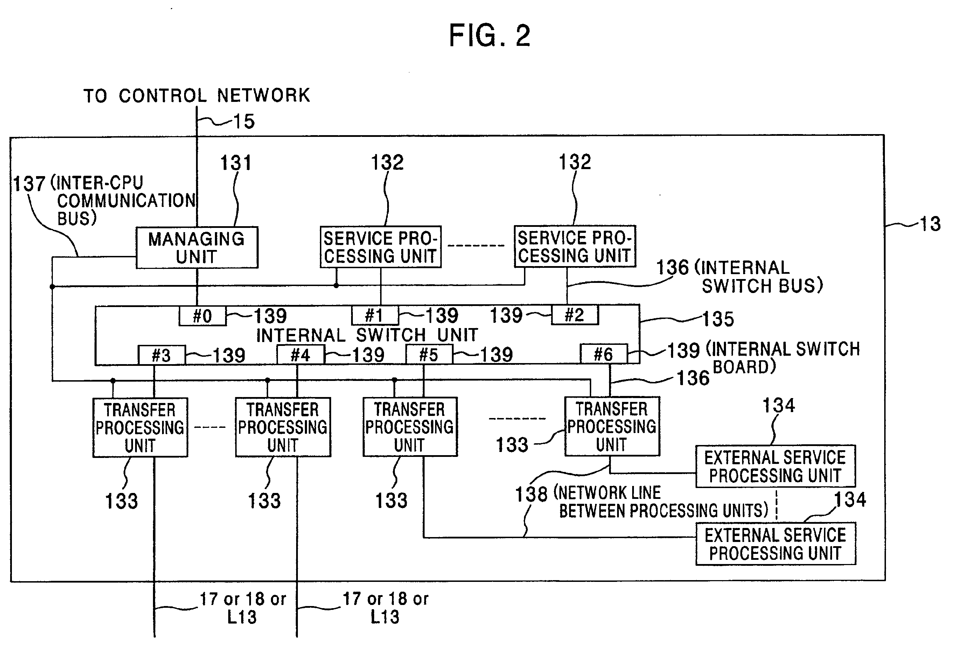

Fig. 2 shows an arrangement of the communication node 13 to which the present invention applies. The communication node 13 is arranged to have a managing unit 131, a service processing unit 132, a transfer processing unit 133, an internal switch 135, and an external service processing unit 134. The managing unit 131, the service processing unit 132, and the transfer processing unit 133 are connected to the internal switch 135 through an internal switch port 139 and an internal switch path 136. The internal switch port 139 has a unique number (internal switch port number) assigned thereto. An inter-CPU communication path 137 is provided among the managing unit 131, the service processing unit 132, and the transfer processing unit 133. An inter-processing unit network line 138 is connected between the transfer processing unit 133 and the external service processing unit 134. The number of the service processing unit 132, the transfer processing unit 133, or the external service processing unit 134 may be plural. The internal switch 135 may be implemented by a crossbar switch, for example.

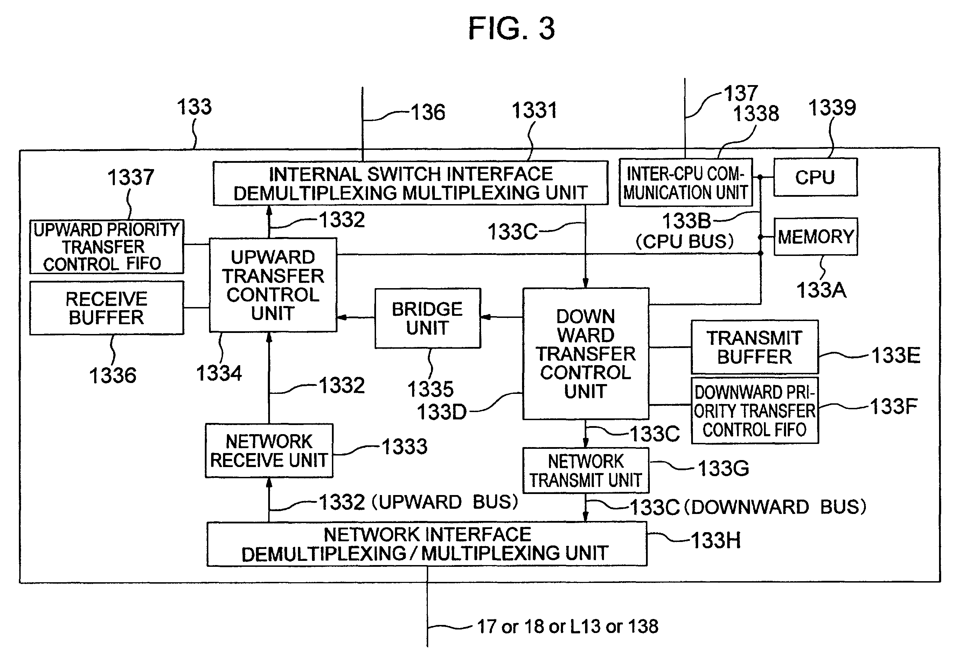

Fig. 3 is a block diagram showing an arrangement of the transfer processing unit 133 included in the communication node. The transfer processing unit 133 is arranged to have an internal switch interface demultiplexing / multiplexing unit 1331, an upward transfer control unit 1334, an upward priority transfer control FIFO (First In First Out) 1337, a receive buffer 1336, a network receive unit 1333, a network interface separation demultiplexing / multiplexing unit 133H, a bridge unit 1335, a CPU 1339, a memory 133A, an inter-CPU communicating unit 1338, a CPU path 133B, a downward transfer control unit 133D, a transmit buffer 133E, a downward priority transfer control FIFO 133F, a network transmit unit 133G, an upward path 1332, and a downward path 133C. The network transmit unit 133G, the network receive unit 1333, and the network interface separation demultiplexing / multiplexing unit 133H may be realized by the LSI's for connecting the LAN and the WAN such as IEEE802 CSMA/CD, ATM, and SONET/SDH.

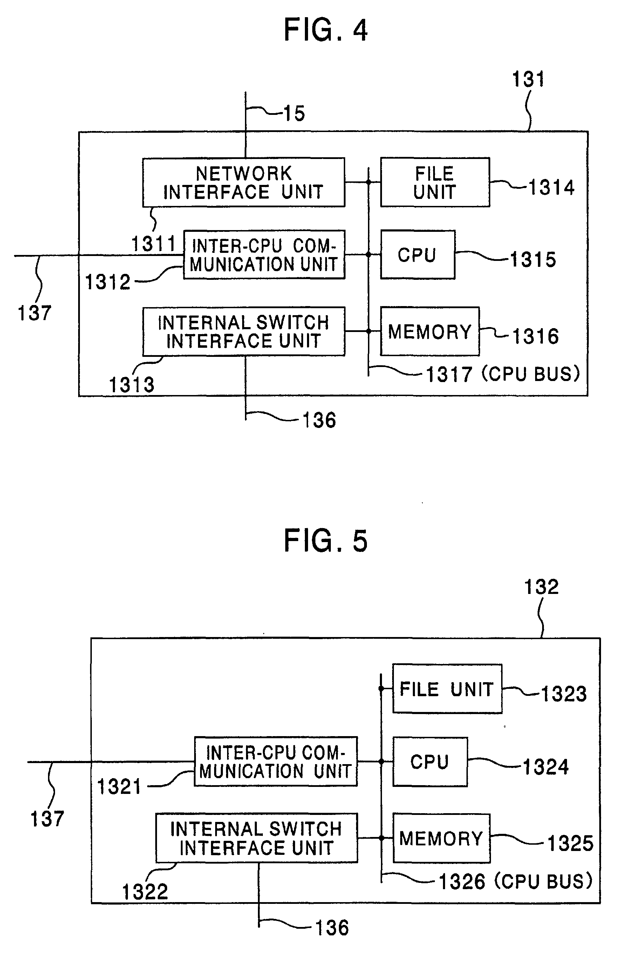

Fig. 4 is a block diagram showing an arrangement of the managing unit 131 included in the communication node. The managing unit 131 is arranged to have a network interface 1311, an inter-CP communicating unit 1312, an internal switch interface 1313, a file unit 1314, a CPU 1315, a memory 1316, and a CPU bus 1317 for connecting these components.

The network interface 1311 may be realized by the LSI for connecting the LAN and WAN such as IEEE802 CSMA/CD, ATM, and SONET/SDH.

Fig. 5 is a block diagram showing an arrangement of the service processing unit 132 included in the communication node. The service processing unit 132 is arranged to have an inter-CPU communicating unit 1321, an internal switch interface 1322, a file unit 1323, a CPU 1324, a memory 1325, and a CPU bus 1326 for connecting these components.

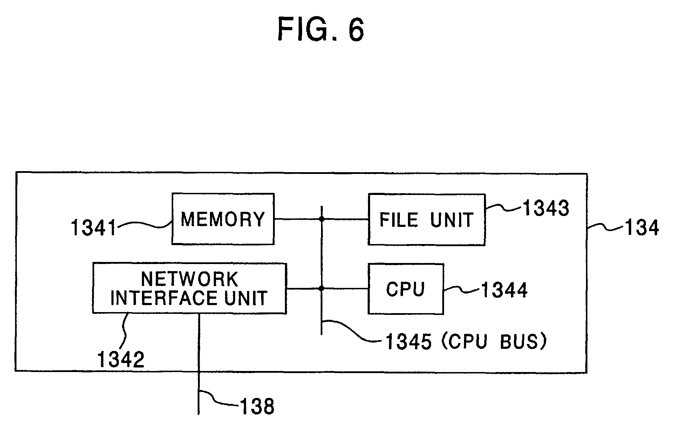

Fig. 6 is a block diagram showing an arrangement of the external service processing unit 134 included in the communication node. The external service processing unit 134 is arranged to have a memory 1341, a network interface 1342, a file unit 1343, a CPU 1344, and a CPU bus 1345 for connecting these components. The network interface 1342 may be realized by the LSI for connecting the LAN and the WAN such as IEEE802 CSMA/CD, ATM, or SONET/SDH.

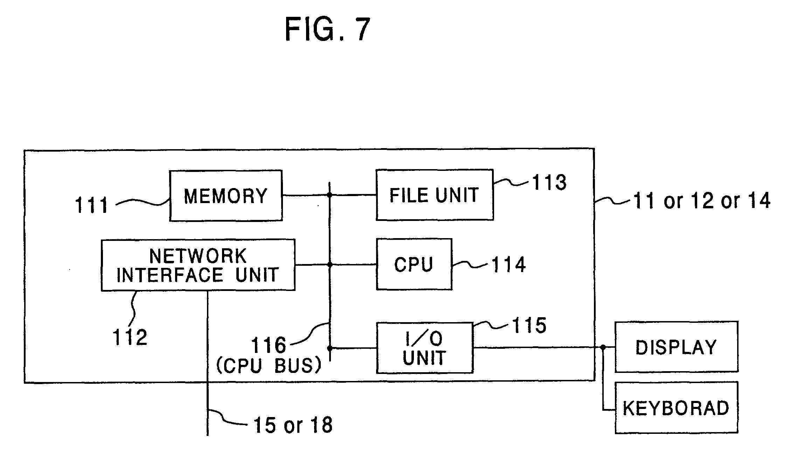

Fig. 7 is a block diagram showing an arrangement of the NMS 11, the control server 12, or the ES 14. As shown in Fig. 7, it is arranged to have a memory 111, a network interface unit 112, a file unit 113, a CPU 114, an I/O unit 115, and a CPU bus 116 for connecting these components. The network interface unit 112 may be realized by the LSI for connecting the LAN and the WAN such as IEEE802 CSMA/CD, ATM, or SDNET/SDH.

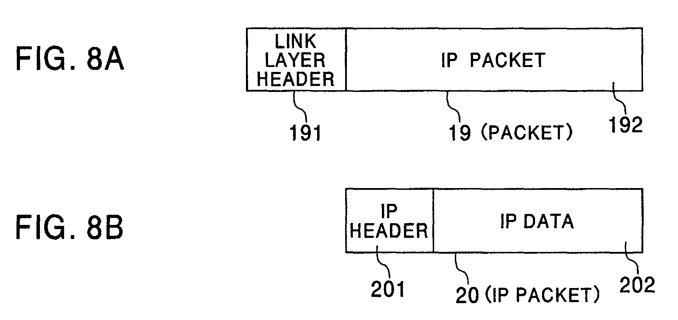

Figs. 8A and 8B show compositions of a packet to be used by the present system. The packet 19 to be transferred on the line is composed of a link layer header 191 that depends on the type of the LAN/WAN and an IP packet 192 in which the packet data is stored. The IP packet 192 stores an IP packet 20 according to the IP packet format, Ipv4 or Ipv6. The IP packet 20 is composed of an IP header 201 and an IP data 202. The IP data 202 is composed of a header portion and a data portion that correspond with the more upward protocol and application (for example, TCP, RSVP, HTTP, MPEG), the details of which are left out.

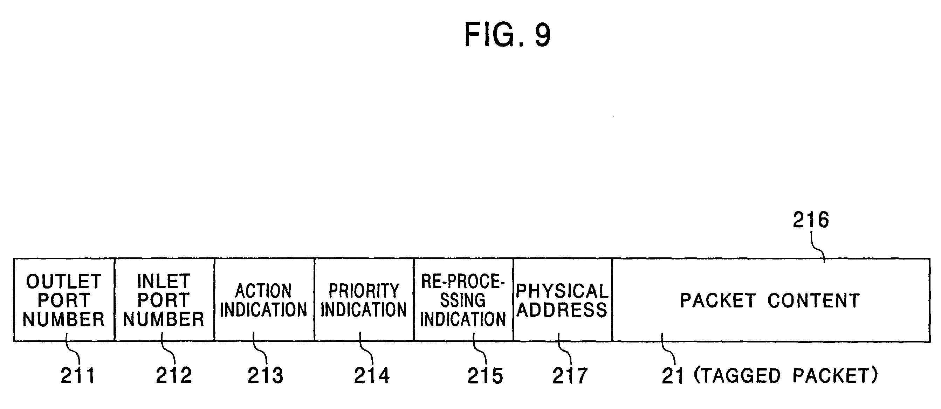

Fig. 9 shows a composition of a tagged packet that passes through the internal switch 135 included in the communication node. The tagged packet 21 is arranged to have an output port number 211, an input port number 212, an action indication 213, a priority indication 214, a re-processing indication 215, a physical address 217, and a packet content 216. The packet content 216 stores the IP packet 20.

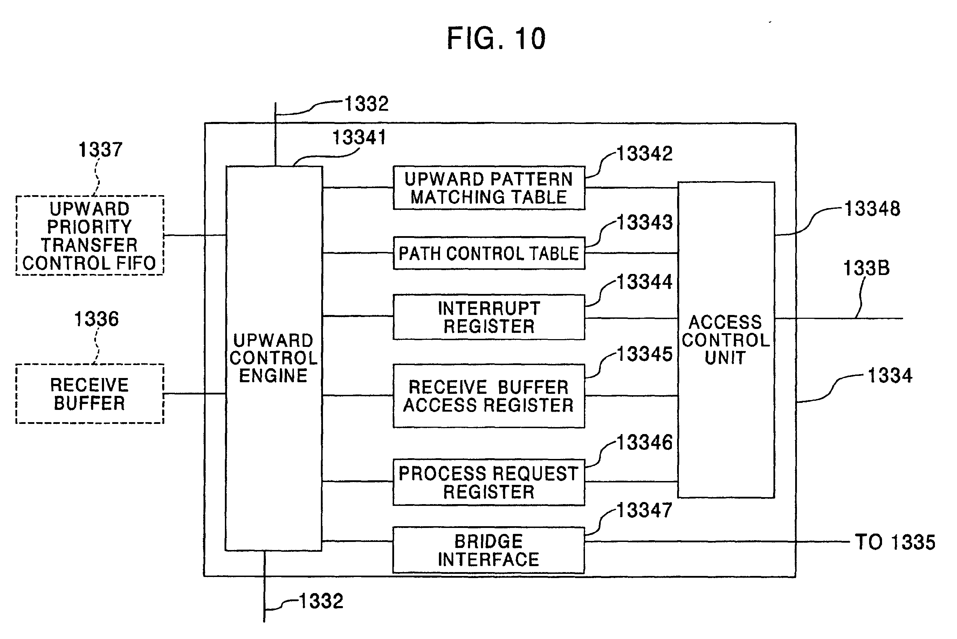

Fig. 10 is a block diagram showing an arrangement of the upward transfer control unit 1334 included in the communication node. The upward transfer control unit 1334 is arranged to have an upward control engine 13341, an upward pattern matching table 13342, a path control table 13343, an interrupt register 13344, a receive buffer access register 13345, a processing request register 13346, a bridge interface 13347, and an access control unit 13348.

The upward control engine 13341 may be realized by a component like a sequence and provides a memory for storing micro instructions, a micro instruction processing unit, and an I/O unit for transferring data with the outside of the sequence, and so forth.

The interrupt register 13344 is a circuit through which the upward control engine 13341 notifies the CPU 1339 of an interrupt request. The receive buffer access register 13345 is a circuit through which the CPU 1339 accesses the receive buffer 1336 and the upward priority transfer control FIFO 1337. The processing request register 13346 is a circuit through which the CPU 1339 notifies the upward control engine 13341 of the processing request. The bridge interface 13347 is a circuit through which inputted is the tagged packet 21 transferred from the downward transfer control unit 133D through the bridge unit 1335. The access control unit 13348 operates to connect the upward transfer control unit itself with the CPU bus 133B.

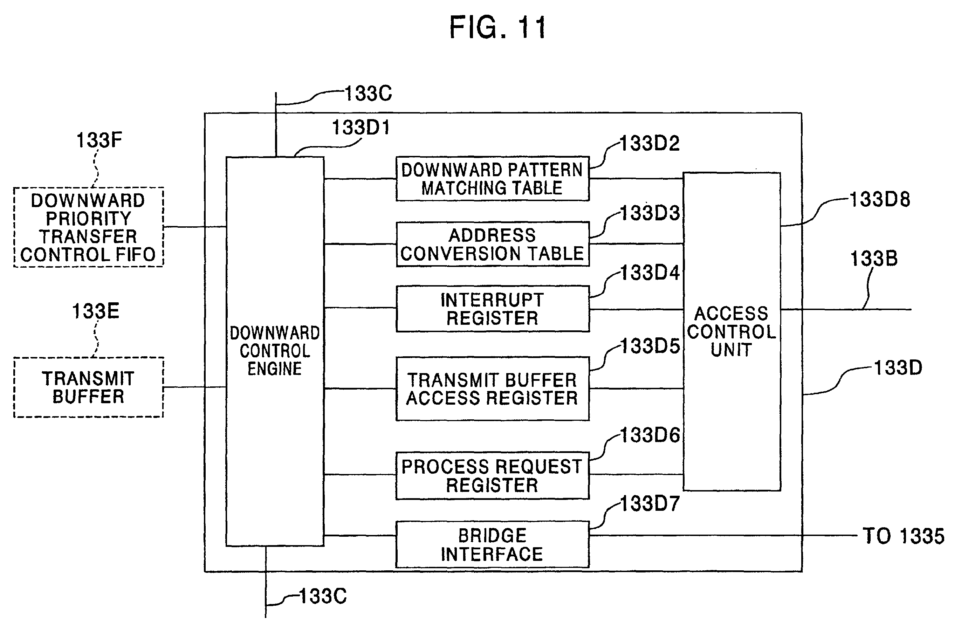

Fig. 11 is a block diagram showing an arrangement of the downward control unit 133D included in the communication node. The downward transfer control unit 133D is arranged to have a downward control engine 133D1, a downward pattern matching table 133D2, an address conversion table 133D3, an interrupt register 133D4, a transmit buffer access register 133D5, a processing request register 133D6, a bridge interface 133D7, and an access control unit 133D8. The downward control engine 133D1 may be realized by a component like a sequence and provides a memory for storing micro instructions, a micro instruction processing unit, an I/O unit for transferring data with the outside of the sequence, and so forth.

The interrupt register 133D4 is a circuit through which the upward control engine 133D1 notifies the CPU 1339 of the interrupt request. The transmit buffer access register 133D5 is a circuit through which the CPU 1339 access the transmit buffer 133E and the downward priority transfer control FIFO 133F. The processing request register 133D6 is a circuit through which the CPU 1339 notifies the downward control engine 133D1 of the processing request. The bridge interface 133D7 is an output circuit from which the tagged packet 21 is transferred to the transfer control unit 1334 through the bridge unit 1335. The access control unit 133D8 is a connecting circuit with the CPU bus 133B.

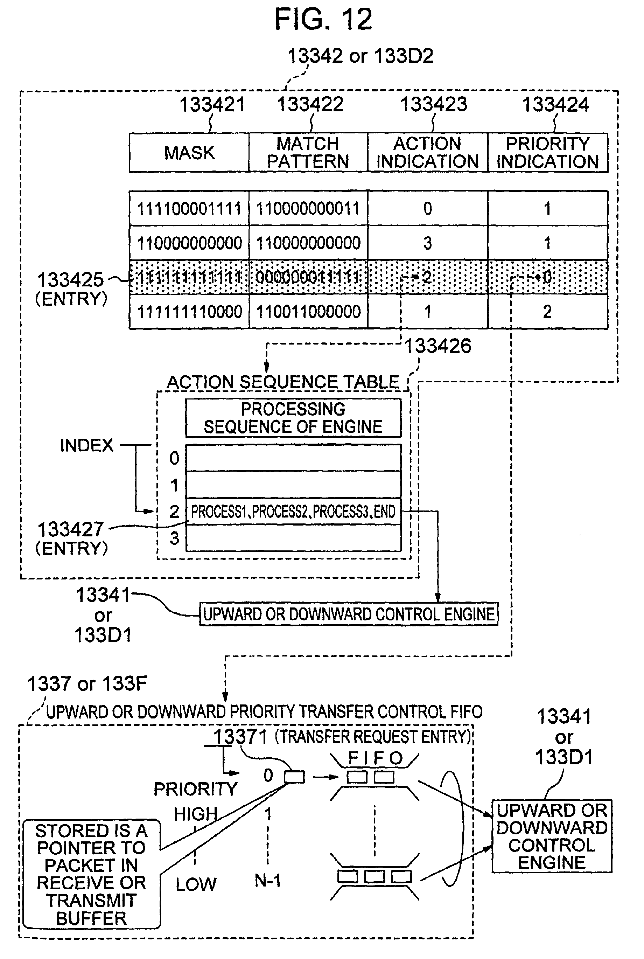

Fig. 12 shows a composition of the upward or the downward pattern matching table (13342 or 133D2) included in the communication node. The upward or the downward pattern matching table (13342 or 133D2) includes a plurality of entries 133425 composed of a mask column 133421, a match pattern column 133422, an action indication column 133423 and a priority indication column 133424. The upward or downward pattern matching table (13342 or 133D2) is a table on which the matched entries are retrieved from the packet content 216 of the packet 19 and the tagged packet inputted by the upward or the downward control engine (13341 or 133D1).

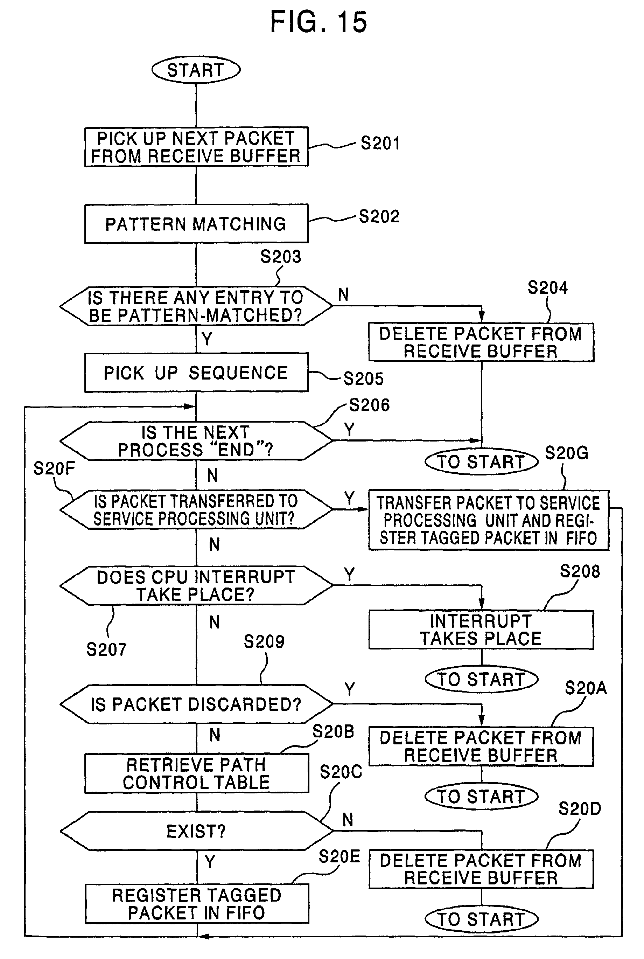

In retrieval, at each unit of the entry 133425, the value of the mask 133421 of the entry is ANDed with the head portion of the inputted packet 19 or the packet content 216 and then is compared with the value of the match pattern 133422. If matched, the value of the action indication 133423 points to the entry 133427 of the action sequence table 133426. The value of the priority indication 133424 points to the upward or the downward priority transfer control FIFO (1337 or 133F). At first, the action sequence table 133426 will be described. The processing sequence to be executed by the upward or the downward control engine (13341 or 133D1) is filled in the entry 133427. The processing sequence may be a micro instruction or an identifier of the micro program. The upward or the downward control engine (13341 or 133D1) operates to enter the processing sequence and perform the processing against the inputted packet 19 and the packet content of the tagged packet according to the processing sequence as will be discussed with reference to Figs. 15 to 20.

Then, the description will be oriented to the upward or the downward priority transfer control FIFO (1337 or 133F). The value of the priority indication 133424 points to one of FIFO's ranged according to the transfer priority, included in the upward or the downward priority transfer control FIFO (1337 or 133F). In the embodiment shown in Fig. 12, the FIFO's are ranged from the highest transfer priority FIFO (number: 0) to the lowest transfer priority FIFO (number: N-1). A transfer request entry 13371 of the packet 19 is registered in the FIFO. The upward or the downward control engine (13341 or 133D1) operates to select these FIFO's according to a specific rule (for example, a simple round-robin or weighted round-robin) and pick up the transfer request entry 13371 located at the head. Then, the control engine operates to pick up the packet 19 or the tagged packet 21 stored in the receive or the transmit buffer (1336 or 133E) pointed by the transfer request entry 13371 and then to transfer it.

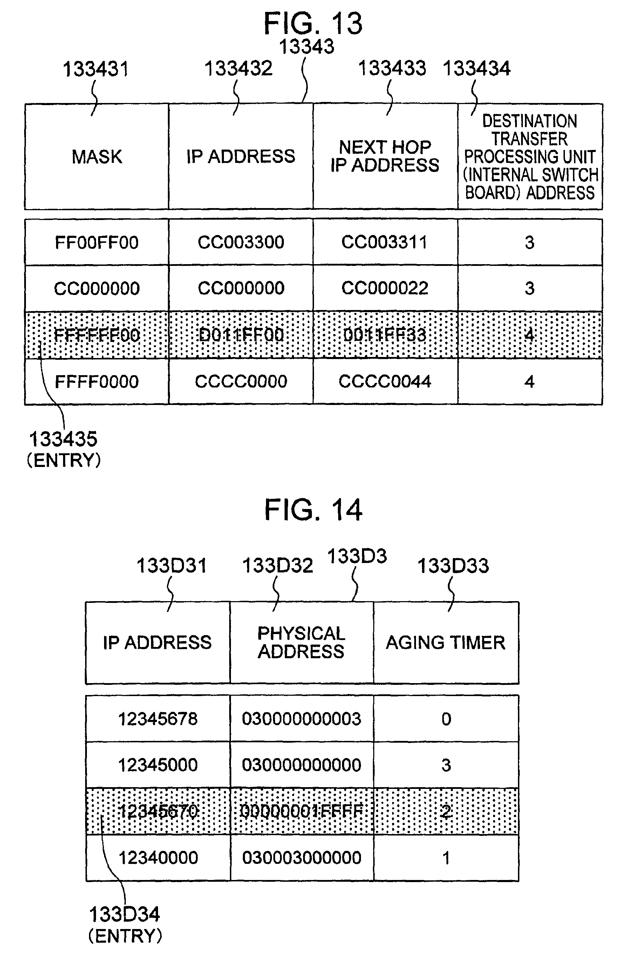

Fig. 13 shows a composition of the pass control table 13343 of the communication node. The pass control table 13343 is composed of a plurality of entries 13435 that are the columns of a mask 133431, an IP address 133432, a next hop IP address 133433, and an output destination transfer processing unit (internal switch port) address 133434.

The pass control table 13343 is a table from which retrieved is the entry 133435 to be matched to the packet 19 inputted by the upward control engine 13341. In retrieval, the value of the mask 133431 is ANDed with a destination IP address included in the IP header 201 of the inputted packet 19. Then, the ANDed value is compared with the value of the IP address 133432. If matched, the values of the next hop IP address 133433 and the output destination transfer processing unit (internal switch port) address 133434 can be obtained. The way of using these values is the same as that in the upward transfer processing of the general IP router and thus is known. Hence, the description thereabout is left out.

Fig. 14 shows a composition of the address conversion table 133D3 of the communication node. The address conversion table 133D3 is composed of a plurality of entries 133D34 that are the columns of an IP address 133D3, a physical address 133D32, and a aging timer 133D33. The address conversion table 133D3 is a table from which is retrieved the entry 133D34 to be matched to the IP packet 20 stored in the packet content 216 of the tagged packet 21 inputted by the downward control engine 133D1. In retrieval, the destination IP address included in the IP header 201 of the IP packet 20 is compared with the value of the IP address 133D31. If matched, the value of the physical address 133D32 is stored in the physical address 217 of the tagged packet. The process performed using the address conversion table is the same as the downward process of the general IP router and thus is known. Hence, the description thereabout is left out.

The values of the pass control table 13343 and the address conversion table 133D3 as described above can be obtained by executing a pass control protocol like the so-called OSPF (Open Shortest Path First) and a protocol control software like an ARP (Address Resolution Protocol). The method of realization is known and thus the description thereabout is left out.

Later, the description will be oriented to the packet transfer function to be QoS-guaranteed included in the communication node 13 with reference to Figs. 15 to 20. The packet 19 received from the line 17, 18, 138 or L13 to the communication node is temporarily stored in the receive buffer 1336 through the network receive unit 1333. This storage is carried out in the entry sequence. Further, the packet 19 transmitted from the communication node to the line 17, 18, 138 or L13 is transmitted from the transmit buffer 133E through the network transmit unit 133G. At first, the description will be oriented to the operation in the upward path 1332 (packet-receiving) direction.

Fig. 15 shows the process of the first processing sequence of the upward transfer 1334 included in the communication node. This process is executed by the upward control engine 13341. In step S201, the next packet 19 is picked out of the receive buffer. Then, in step S202, the pattern matching is executed using the upward pattern match table 13342. If no entry 133425 is matched, in step S204, the packet 19 is deleted from the receive buffer and then the process is returned to the start.

If an entry 133425 is matched, in step S205, the values of the action indication 133423 and the priority indication 133424 associated with the matched entry are stored in the action indication 213 and the priority indication 214 of the tagged packet 21. At a time, the processing sequence of the corresponding entry 133427 in the action sequence table 133426 is picked out. According to this processing sequence, until the "end" is detected in step S206, the process in step S207 and later is executed. Hereafter, each process included in the processing sequence is referred to as "an instruction".

In step S20F, it is determined if the instruction is "transfer to the service processing unit". If yes, in step S20G, an immediate value (corresponding to #03 of MVI#03, for example) of the "transfer to the service processing unit) is stored in an outlet port number 211 of the tagged packet 21. At a time, the number of the transfer processing unit (port) itself is stored in an inlet port number 212. The restart indication 215 stores "off". The packet content 216 stores the IP packet 192 of the packet. The transfer request entry 13371 having a pointer to this tagged packet 21 is registered in the upward priority transfer control FIFO 1337 indicated by the priority indication 133424 obtained in the step S203. In step S207, if the instruction is "occurrence of a CPU interrupt", the process of the packet is entrusted to the CPU 1339 through the interrupt register 13344 and then the process is returned to the start.

The processes of the steps S202, S203, S207 and S208 make it possible for the CPU 1339 to perform any data processing with respect to a specific packet. If in step S209 the instruction is "discard the packet", in step S20A, the packet is deleted from the receive buffer and then the process is returned to the start. The processes of the steps S202, S203, S209 and S20A are the implementation of the so-called "packet filtering" function.

Then, in step S20B, the process is executed to retrieve an entry 133435 to be matched by using the path control table 13343. If no proper entry is found, in step S20D, the packet is deleted from the receive buffer, and then the process is returned to the start. If any proper entry is found, in step S20E, the value of the output destination transfer processing unit 133434 is stored in the outlet port number 211 of the tagged packet 21. The inlet port number 212 stores the number of the transfer processing unit (port) itself. The restart indication 215 stores "off". The packet content 216 stores the IP packet 192 of the packet. The transfer request entry 13371 having a pointer to this tagged packet 21 is registered in the upward priority transfer control FIFO 1337 indicated by the priority indication 13342 obtained in the step S203.

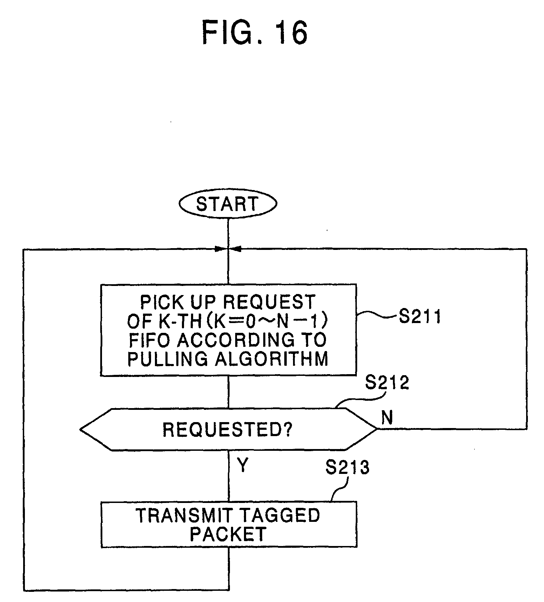

Fig. 16 shows the process of the second processing sequence of the upward transfer 1334 included in the communication node. This process is executed by the upward control engine 13341. In step S211, the K-th FIFO is selected from N FIFO's of the upward priority transfer control FIFO 1337 according to the pulling algorithm (for example, a simple round-robin or weighted round-robin). If it is determined if the FIFO is empty in step S212, if it is empty, the process is returned to the step S212.

If requested, in step S213, the process is executed to transmit the tagged packet 21 pointed by the transfer request entry 13371 to the internal switch 135 through the internal switch path 136. After the completion of transmission, the tagged packet is deleted from the receive buffer 1336. Afterwards, the process is returned to the step S211. The processes of the steps S202, S205, S20B, S20E, S211 and S213 make it possible to detect a specific IP packet flow and thereby realize a specific communication quality like the bandwidth guarantee against the detected IP packet flow.

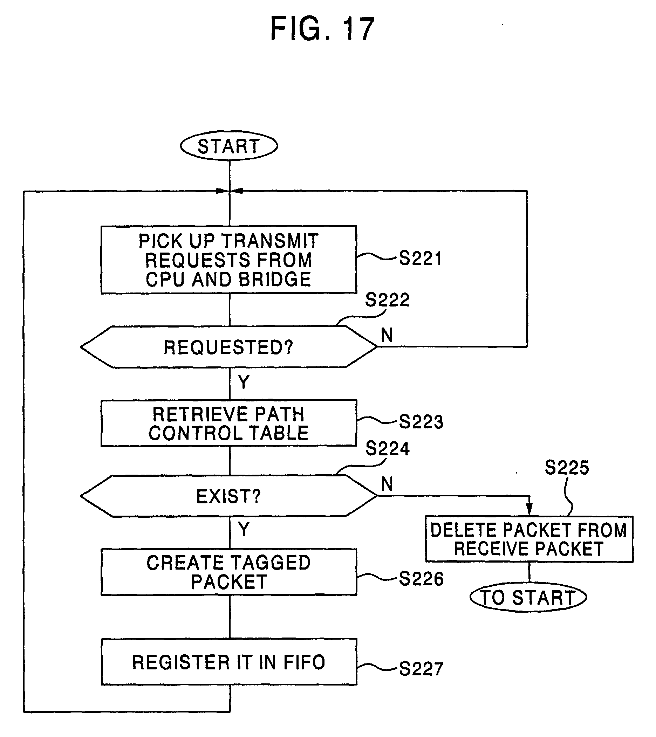

Fig. 17 shows a process of the third processing sequence of the upward transfer 1334 included in the communication node. This process is executed by the upward control engine 13341. In step S221, the upward control engine 13341 monitors the process request register 13346 and the bridge interface 13347 and then picks up a request for transmitting a packet from the CPU 1339 and a request for transmitting a packet from the downward transfer control unit 133D through the bridge 1335. In step S222, it is determined if the request exists. If no, the upward control engine subsequently monitors the bridge interface in the step S221. If yes, the process is executed to enter the packet through the process request register 13346 or the bridge interface 133471 and then store it in the receive buffer 1336 in the format of the tagged packet 21.

In step S223, the process is executed to retrieve an entry 133435 to be matched by using the path control table 13343. If no proper entry is found, in step S225, the packet is deleted from the receive buffer, and then the process is returned to the start. If any proper entry is found, in step S226, the value of the output destination transfer processing unit 133434 is stored in the outlet port number 211 of the tagged packet 21. At a time, the inlet port number 212 stores the number of the transfer processing unit (port) itself. The restart indication 215 stores "off". The packet content 216 stores the IP packet 192 of the packet. The transfer request entry 13371 having a point to the tagged packet 21 is registered in the upward priority transfer control FIFO 1337 indicated by the priority indication 133424 obtained in the step S227.

As described above, the first to the third processing sequences indicated in Figs. 15 to 17 are executed in parallel by the upward control engine 13341.

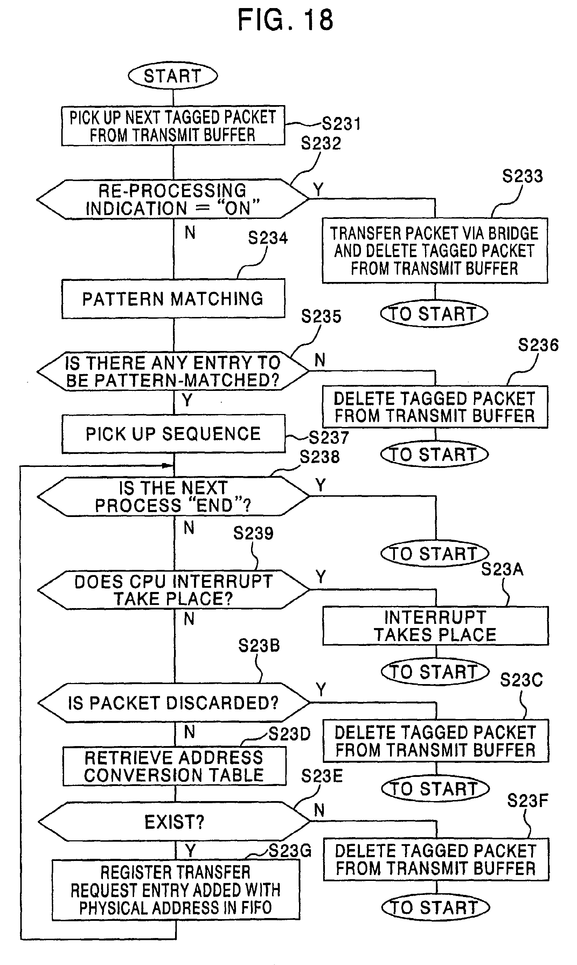

In turn, the description will be oriented to the processes of the first to the third processing sequences of the downward transfer control unit 133D included in the communication node with reference to Figs. 18 to 20.

Fig. 18 shows the process of the first processing sequence of the downward transfer 133D included in the communication node. This process is executed by the downward control engine 133D1. In step S231, the next tagged packet 21 is picked out of the transmit buffer. Then, in step S232, it is determined if the value of the re-processing indication 215 of the tagged packet is "on". If it is "on", in step S233, the tagged packet is transferred to the upward transfer control unit 1334 through the bridge 1335. At a time, the tagged packet is deleted from the transmit buffer 133E and then the process is returned to the start. This results in executing the processes of the steps S221, S222, S223 and S224 in Fig. 17.

If in the step S232 it is determined that the value is "off", in step S234, the pattern matching is carried out by using the downward pattern match table 133D2. If no proper entry 133425 is matched, in step S236, the tagged packet 21 is deleted from the transmit buffer, and then the process is returned to the start.

If any proper entry is matched, in step S237, the values of the action indication 133423 and the priority indication 133424 of the entry are stored in the action indication 213 and the priority indication 214 of the tagged packet 21. At a time, the process is executed to pick up the processing sequence of the corresponding entry 133427 of the action sequence table 133426. According to this processing sequence, until the "end" is detected in step S238, the process of step S239 or later is executed. Hereafter, each process of the processing sequence is referred to as "an instruction".

In the step S239, if the instruction is "occurrence of a CPU interrupt", in step S23A, the process of the packet is entrusted to the CPU 1339 through the interrupt register 133D4, and then the process is returned to the start. The processes of the steps S234, S235, S237, S238, S239 and S23A make it possible for the CPU 1339 to perform any data processing with respect to a specific packet flowing in the downward direction. If in step S23B the instruction is "discard the packet", in step S23C, the tagged packet is deleted from the transmit buffer, and then the process is returned to the start. The processes of the steps S234, S235, S23B and S23C are an implementation of the so-called downward "packet filtering" function.

Then, in step S23D, the process is executed to retrieve an entry 133D34 to be matched by using the address conversion table 133D3. If in step S23E no proper entry is found, in step S23F, the tagged packet is deleted from the transmit buffer, and then the process is returned to the start. If any proper entry is found, in step S23G, the value of the physical address 133D32 is stored in the physical address 217 of the tagged packet 21. The packet content 216 stores the IP packet 192. The transfer request entry 133371 having a pointer to this tagged packet 21 is registered in the downward priority transfer control FIFO 133F indicated by the priority indication 214.

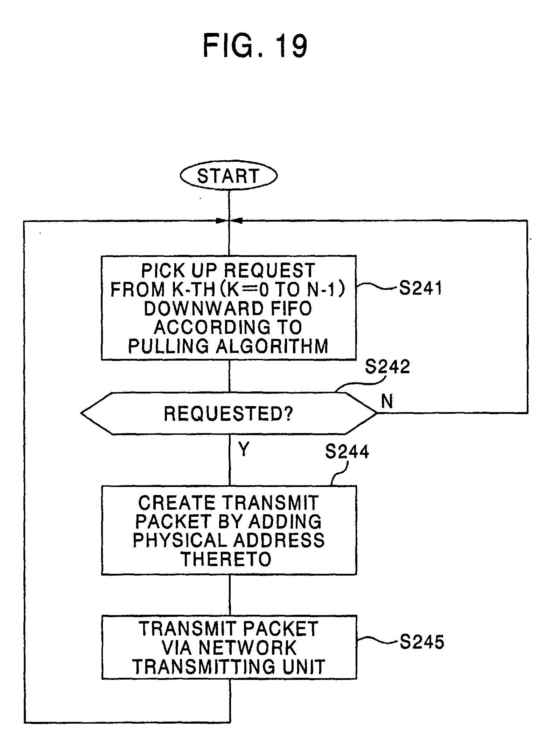

Fig. 19 shows the process of the second processing sequence of the downward transfer control unit 133D included in the communication node. This process is executed by the downward control engine 133D1. In step S241, the process is executed to select the K-th FIFO from N FIFO's of the downward priority transfer control FIFO 133F according to the pulling algorithm (for example, a simple round-robin or weighted round-robin) and then pick up the transfer request entry 13371 from the selected FIFO. In step S242 it is determined if the FIFO is empty. If it is empty, the process is returned to the step S241. If it is not empty, in step S244, the packet 19 to be transmitted is created. The creation is executed so that the value of the physical address 217 of the tagged packet 21 pointed by the transfer request entry 13371 is stored in the destination physical address of the link layer header 191 of the packet 19. The source physical address stores the physical address of itself. The IP packet 192 stores the content (IP packet 20) of the packet content 216 of the tagged packet 21.

In step S245, the process is executed to transmit the packet to the line 17, 18, 138 or L13 through the network transmit unit 133G and, upon completion of the transmission, delete the tagged packet from the transmit buffer. Afterwards, the process is returned to the step S241. Like the upward case, the foregoing process makes it possible to detect a specific IP packet flow in the downward case and thereby realize the specific communication quality like the bandwidth guarantee against the detected IP packets.

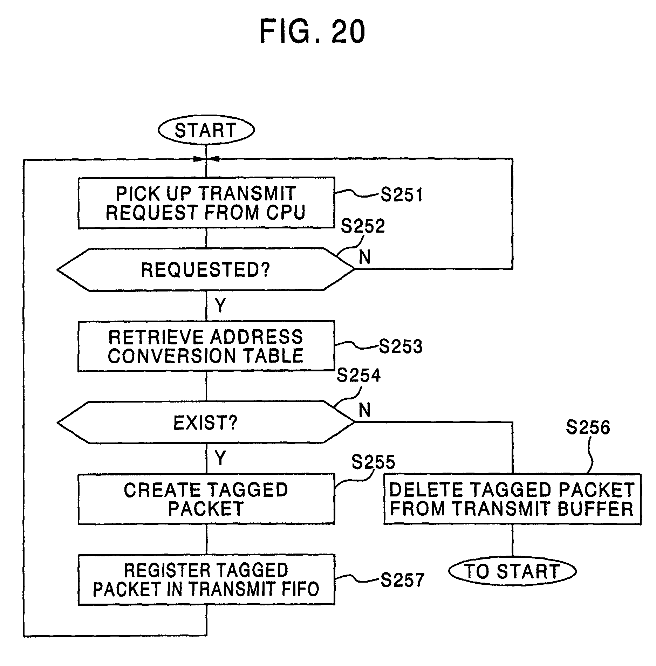

Fig. 20 shows the process of the third processing sequence of the downward transfer control unit 133D included in the communication node. This process is executed by the downward control engine 133D1. In step S251, the downward control engine 133D1 operates to monitor the processing request register 133D6 and pick up the request for transmitting a packet from the CPU 1339. In step S252, it is determined if the request exists. If no, the downward control engine subsequently monitors the register 133D6 in the step S251. If yes, in step S253, the request is stored in the transmit buffer 133E in the format of the tagged packet 21. Further, the entry 133D34 to be matched is retrieved by using the address conversion table 133D3.

If in step S254 no entry is found, in step S256, the tagged packet is deleted from the transmit buffer, and then the process is returned to the start. If in the step S254 any entry is found, in step S255, the value of the physical address 133D32 is stored in the physical address of the tagged packet 21. At this time, the outlet port number 211 of the tagged packet 21 is not updated because the value has been already stored in the outlet port number 211. The inlet port number 212 stores the number of the transfer processing unit (port) itself. The restart indication 215 is not updated because the value has been already stored therein. The packet content 216 stores the IP packet 192. In step S257, the transfer request entry 13371 having a pointer to this tagged packet 21 is registered in the downward priority transfer control FIFO 133F indicated by the priority indication 214.

In the step S254, the transfer request entry 13371 having a pointer to this tagged packet 21 is registered in the downward priority transfer control FIFO with the corresponding priority by using the value indicated in the priority indication 214 of the tagged packet 21.

The first to the third processing sequences indicated in Figs. 18 to 20 are executed in parallel by the downward control engine 133D1.

### [Description on the embodiment of the software function]

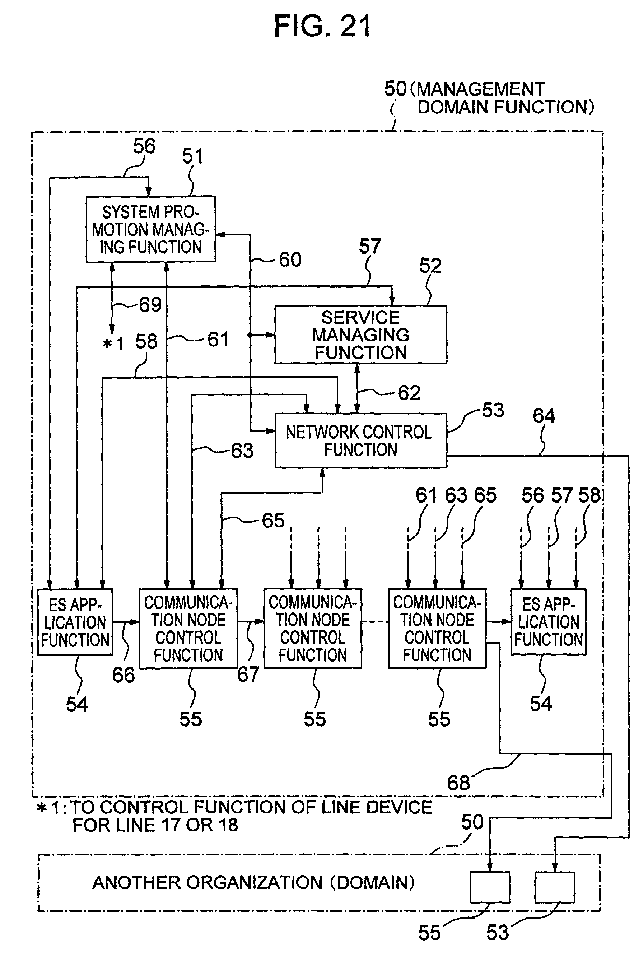

Fig. 21 shows one configuration of the network system software.

The present system includes a plurality of management domain function 50. One management domain function 50 is arranged to have a system administration managing function 51, a service managing function 52, a network control function 53, an ES application function 54, and a communication node control function 55. The connecting relation among these functions, that is, the relation of transferring information among these functions is indicated by an arrow-headed line of Fig. 21. The connection between a plurality of management domain functions 50 is realized by a connection with the network control function 53 and a connection 68 with the communication node control function 55 as illustrated in Fig. 21. In general, it is obvious that four or more management domain functions may be connected in a mesh-like manner.

In correspondence with the configuration of Fig. 1, the system administration managing function 51 is executed on the NMS 11, the ES application function 54 is executed on the ES 14, the service managing function 52 and the network control function 53 are executed on the control server 12, and the communication node control function 55 is executed on the communication node 13. The service managing function 52 and the network control function 53 may be executed on one or more control servers 12. Then, the description will be oriented to how the arrow-headed lines for indicating the transfer of information may correspond with those of Fig. 1. A numeral 56 denotes an arrow-headed line that indicates transfer of information between the ES 14 and the NMS 11 through the access network line 18, the communication node 13, the control network line 15, and the control network 16.

Likewise, 57 and 58 denote an arrow-headed line that indicates transfer of information between the ES 14 and the control server 12 through the access network line 18, the communication node 13, the control network line 15, and the control network 16. 60 denotes an arrow-headed line that indicates transfer of information between the NMS 11 and the control server 12 through the control network line 15 and the control network 16. 61 denotes an arrow-headed line that indicates transfer of information between the NMS 11 and the communication node 13 through the control network line 15 and the control network 16. 62 denotes an arrow-headed line that may indicate transfer of information between the control servers 12 through the control network line 15 and the control network 16. 63 denotes an arrow-headed line that indicates transfer of information between the control server 12 and the communication node 13 through the control network line 15 and the control network 16. 64 denotes an arrow-headed line that indicates transfer of information between the control servers 12 through L16.

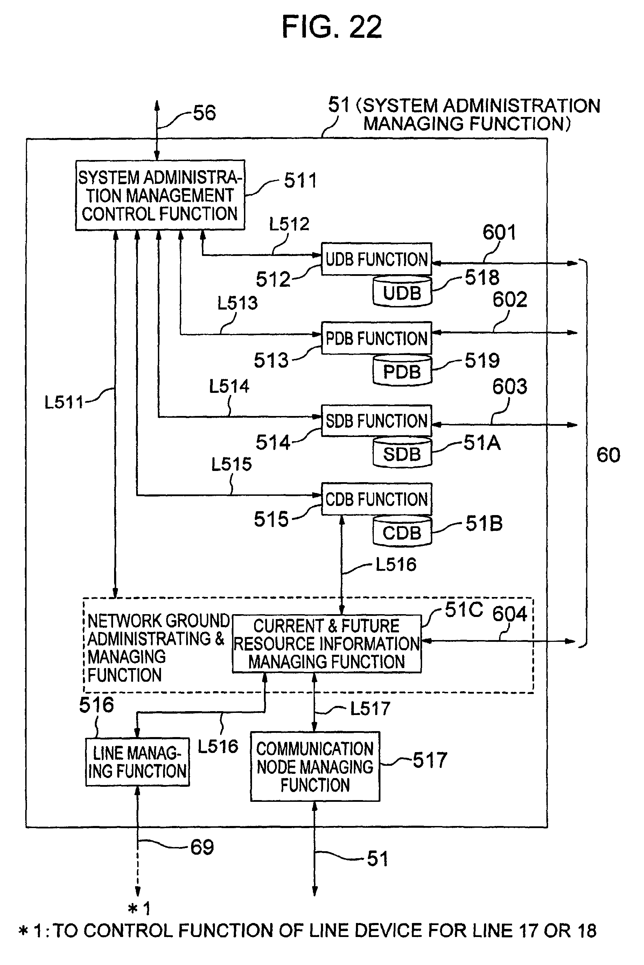

Fig. 22 shows an arrangement of the system administration managing function 51. The system administration managing function 51 is arranged to have a system administration management control function 511, a UDB (User-information Database) function 512, UDB 518, a PDB (Policy Database) function 513, a PDB 519, an SDB (Software Database) function 514, SDB51A, CDB (Configuration Database) function 515, a CDB 51B, a line managing function 516, a communication node managing function 517, and a current & future resource information managing function 51C. The line managing function 516 realizes the lines 17, 18 and the like. For example, the line managing function 516 is connected to the LAN (Local Area Network) and the WAN (Wide Area Network) like IEEE802 CSMA/CD, ATM, and SONET/SDH, that is, the control function of the LAN switch, the ATM switch and the SONET/SDH transmitter by the line 69. The line managing function operates to perform the layout of lines, setting of a bandwidth, administration (start, end), and collection of statistical information in association with the control function.

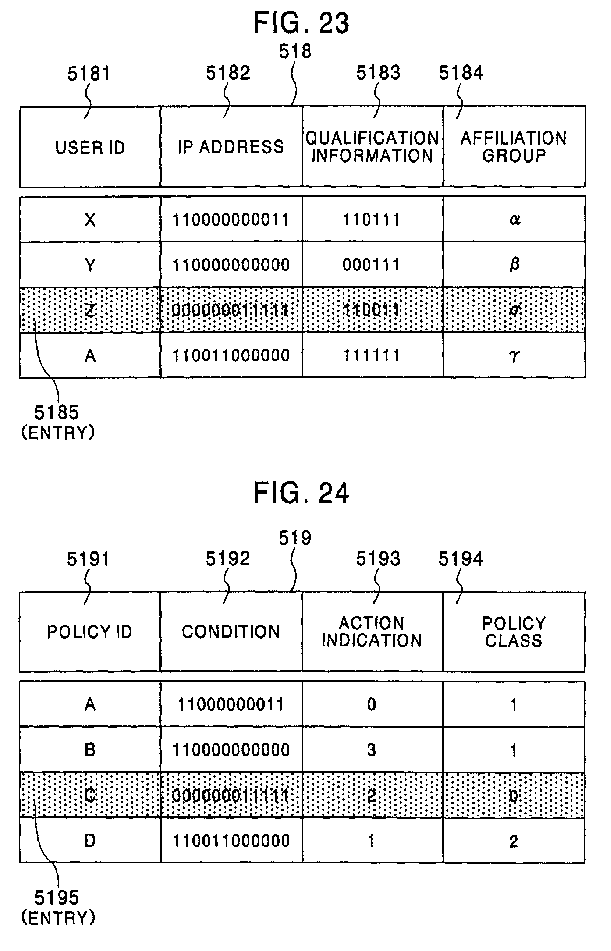

Fig. 23 shows a composition of the UDB 518. The UDB 518 is composed to have a user ID 5181, an IP address 5182 of the user, qualification information 5183 of the user, and an affiliation group 5184 of the user etc.

Fig. 24 shows a composition of the PDB 519. The PDB 519 is composed to have a policy ID 5191, a condition 519, an action indication 5193, and a policy class 5194.

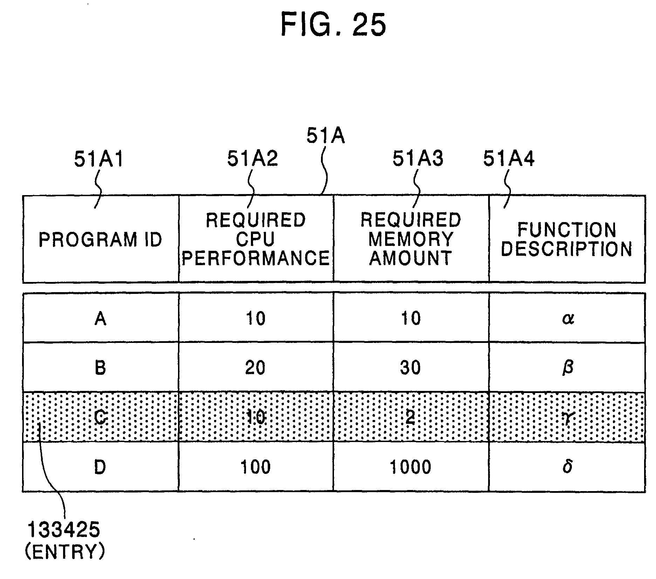

Fig. 25 shows a composition of the SDB 51A. The SDB 51A is composed to have a program ID 51A1, a required CPU performance 51A, a required memory amount 51A3, and a function description 51A4 etc.

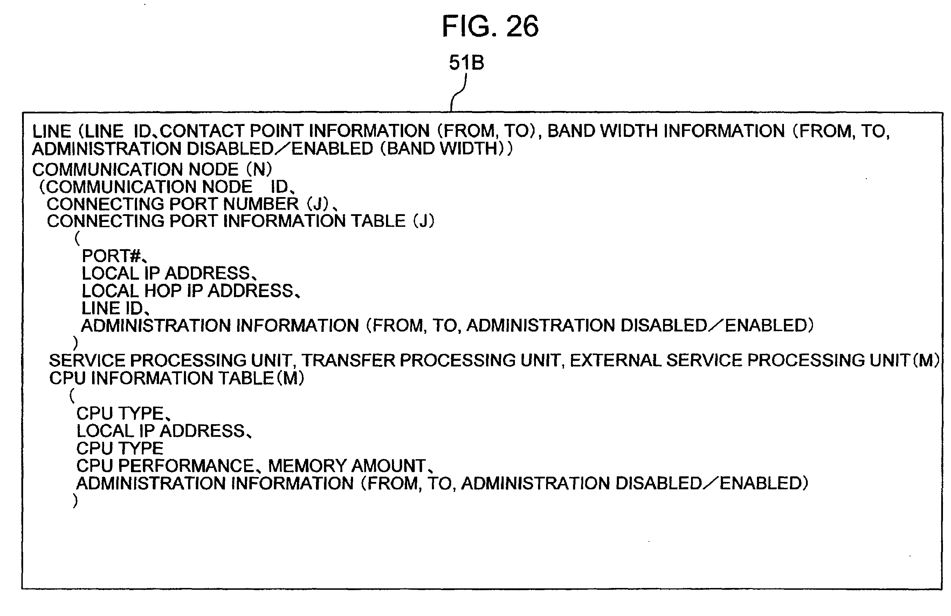

Fig. 26 shows a composition of CDB 51B. It is displayed and described in the table-definition format of the program language.

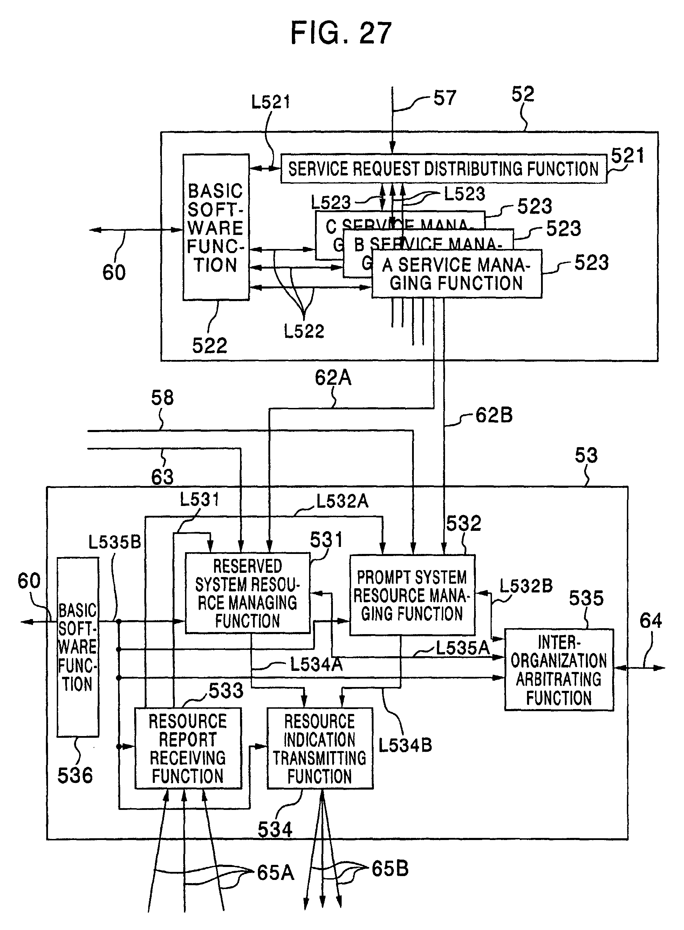

Fig. 27 shows the arrangements of the service managing function 52 and the network control function 53. The service managing function 52 is arranged to have a basic software function 522, a service request distributing function 521, and a service managing function 523 located in correspondence with the service (illustrated as the service managing functions of A, B and C in Fig. 27). Then, the network control function 53 is arranged to have a reserved system resource managing function 531, a prompt system resource managing function 532, a resource report receiving function 533, a resource indication transmitting function 534, an inter-organization arbitrating function 535, and a basic software function 536.

The service request distributing function 521 operates to accept a service request, for example, a request for opening up a video conference, from the ES application function 54 through the line 57, separate the request according to the requested service type, and then transfer any one of the plurality of service managing functions 523, for example, the service managing function 523 corresponding to the video conference service managing function. The service managing function 523 operates to determine the network resource required for providing the service, for example, in the case of the video conference, the network resource composed of "a set of QoS-guaranteed paths" and "a mixing function of the moving picture" for connecting three ES's 14 corresponding to the participants X, Y and Z and the data processing function of mixing the moving picture from these three spots into one moving picture, and to give a request for the network resource to the reserved system resource managing function 531 and the prompt system resource managing function 532.

Herein, as described above, the network resource may be a QoS-guaranteed communication path between the ES's 14 or a data processing function to be operated on the communication node 55, that is, a Web caching proxy function, a video conference coding rule conversion function, a mixing function of N pieces of moving picture stream information, or a combination of the QoS-guaranteed communication path and the data processing function.

The reserved system resource managing function 531 and the prompt system resource managing function 532 are associated with the system administration managing function 51 and the inter-organization arbitrating function so that they can reservedly or promptly obtain the network resource and convert it into the resource indication information to be sent to the communication node 13. The resource indication transmitting function 534 determines the target communication node 13 to which the resource indication information is to be transmitted and then transmits it to one or more proper communication node control functions 55. Each communication node control function 55 replies back the resource report information. The resource report receiving function 533 receives it and then determines the type of the resource report information and notifies the system administration managing function 51, the reserved system resource managing function 531 and the prompt system resource managing function 532 of the determined result.

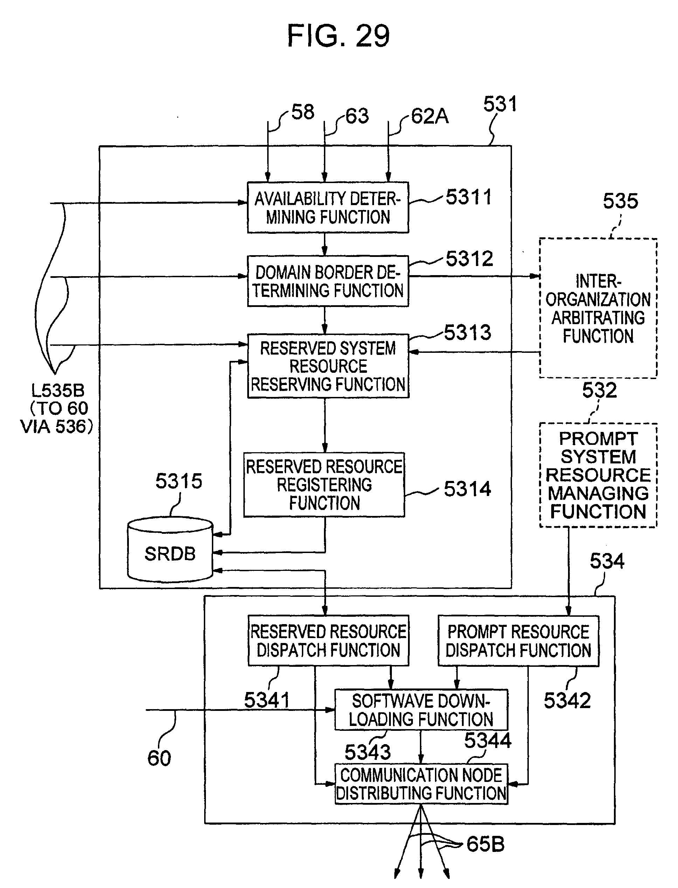

The inter-organization arbitrating function 535 operates to negotiate with the inter-organization arbitrating function 535 belonging to another management domain function 50 for the purpose of obtaining the necessary network resource. The basic software functions (522 and 536) are served as the receiving side when the software or the control information are dynamically downloaded by a software download function 5343 shown in Fig. 29 (to be discussed below). These basic software functions provide the execution environments of the so-called mobile codes such as reception, process generation, start, management of access to local resource (data). In the present patent application, all the basic software functions have the same function as one another. This makes it possible to dynamically download the service management function 523 and the communication node control function 55 inside of the communication node 13 and start up them, which leads to implementing a programmable network.

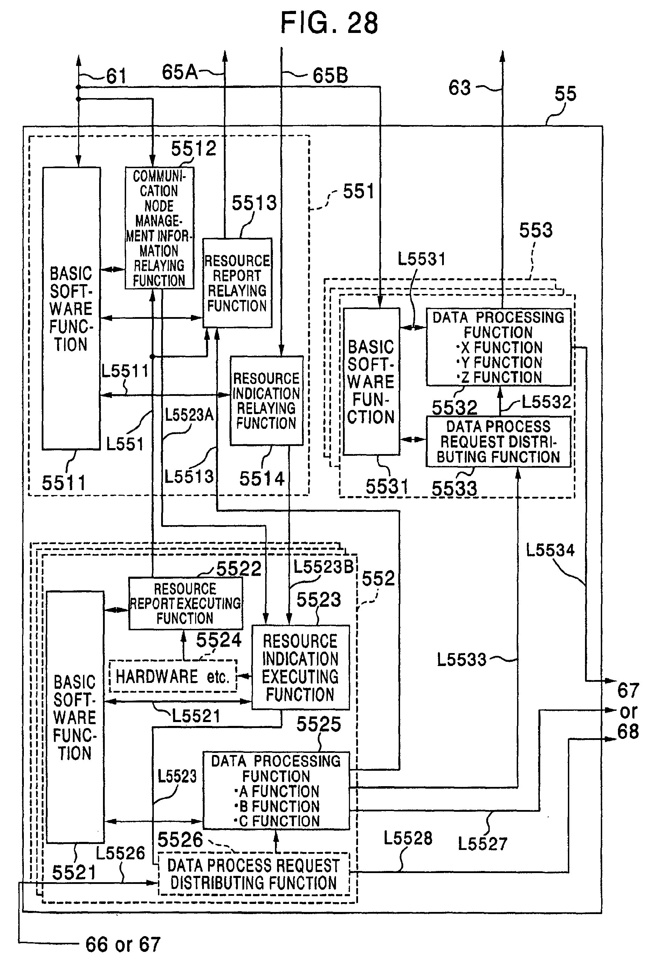

Fig. 28 shows an arrangement of the communication node control function 55. The communication node control function 55 is roughly separated into the function groups indicated by numerals 551, 552 and 553. The number of the function group 552 or 553 may be plural. In correspondence with the arrangement of Fig. 2, the function group 551 is executed on the management unit 131, the function group 552 is executed on the transfer processing unit 133, and the function group 553 is executed on the service processing unit 132 or the external service processing unit 134.

The description of the function group 551:
The group 551 is made up of a basic software function 5511, a communication management information relaying function 5512, a resource report relaying function 5513, and a resource indication relaying function 5514.

The description of the function group 552:
The group 552 is made up of a basic software function 5521, a resource report executing function 5522, a resource indication executing function 5523, and a data processing function 5525.

The description of the function group 553:
The group 553 is made up of a basic software function 5531, a data processing function 5532, and a data processing request distributing function 5533.

Fig. 29 shows an arrangement of the reserved system resource managing function 531. The reserved system resource managing function 531 is made up of an availability determining function 5311, a domain border determining function 5312, a reserved system resource reserving function 5313, a reserved resource registering function 5314, and an SRDB (Scheduled Resource Database) 5315 to be accessed by the function 5314.

Then, the resource indication transmit function 534 is made up of a reserved resource dispatching function 5341, a prompt resource dispatching function 5342, a software downloading function 5343, and a communication node distributing function 5344.

### [Packet transfer function and data processing function of the communication node]

On the assumption of the foregoing description, the description will be oriented to the QoS-guaranteed packet transfer function and the data processing function of the communication node 13 with reference to Figs. 2 and 28 as an onset.

### (1) QoS-guaranteed packet transfer function

It is obvious from the description about Figs. 2 to 20 that the communication node 13 performs the packet transfer with a certain bandwidth guaranteed of, for example, the packet group carrying the moving picture of the video conference (referred to as a moving picture packet flow) transmitted from the ES application function 54. That is, the packet 19 belonging to the moving picture packet flow includes a different packet header pattern from another packet flow. This pattern can be identified by having an entry 133425 registered therein, that is, having the mast and matching pattern set thereto. Further, the priority transfer of the packet for guaranteeing the data processing and the communication bandwidth against the packet through the effect of the CPU 1339 is made possible by setting the action indication and the priority indication. The registration of the entry can be realized by enabling the resource indication executing function 5523 to set the entry to the hardware 5524 (concretely, the upward or the downward pattern matching table).

As described above, the inputted moving picture packet, for example, is outputted from the transfer processing unit 133 through the transfer processing unit 133 and the internal switch 135. The QoS-guaranteed packet transfer can be realized by the transfer processing unit 133. In association with the arrangement of Fig. 28, the inputted packet from the line 66 or 67 passes through the data processing request distributing function 5526 (that is realized by the upward and the downward transfer control units) on the path indicated by L5528 and then is outputted.

### (2) Data processing function of packet

In addition to the function of the above-mentioned item (1), the CPU 1339 performs the upward or downward data processing with respect to the packet belonging to the specific packet flow. For this processing, it is necessary to register an instruction for requesting the CPU interrupt in the entry 133427 of the corresponding action sequence table 133426. As a result, the data processing request distributing function 5526 (that is realized by the upward and the downward transfer control unit) notifies the data processing function 5523 on the CPU 1339 of the interrupt. Hence, the data processing function 5523 operates to enter the packet, analyze the header and the data content of the packet, and execute the necessary data processing function (illustrated as an A function, a B function, and a C function in Fig. 28) for the purpose of executing the data processing of the packet.

The data processing function includes a coding rule conversion process of the moving picture information included in the packet, a packet discarding process (that is the so-called packet filtering or fire-wall function), and so forth. Upon completion of execution, if necessary, the packet is returned to the data processing request distributing function 5526, that is, the so-called upward and downward transfer control units. Like the description of the item (1), the QoS-guaranteed packet transfer is realized and the data-processed packet is outputted from the transfer processing unit 133 to the line 17 or 18.

### (3) Data processing function in the service processing unit

This function is the same as the function (2) except that the data processing of the packet is carried out in the service processing unit 132. In order to transfer a specific IP packet to the service processing unit 132 from the transfer processing unit 133, it is necessary to register the entry 133425 of the upward pattern matching table 13342 and set such a value as allowing the mask or the match pattern to detect the IP packet. Further, it is also necessary to register the following "instructions" to the processing sequence of the entry 1333427 of the action sequence table 133426 pointed by the action indication:
(1) "transfer to service processing unit"
(2) "end"

When this sequence is executed in the process shown in Fig. 15, the IP packet is transferred to the specific service processing unit 132. The service processing unit enables to perform any data processing with respect to the IP packet stored in the packet content of the tagged packet 21. In association with the arrangement of Fig. 28, the data processing software run on the service processing unit 132 corresponds to the unit 553. The data processing request distributing process 5533 and the data processing function 5532 perform the data processing with respect to the IP packet.

Upon completion of the execution, the value of the outlet port number 211 of the tagged packet 21 is replaced with the value of the inlet port number 212 and the value of the re-processing indication 215 is set on. Then, the request for transfer is issued to the internal switch interface 1332. Then, the tagged packet 21 is received by the transfer processing unit 133, (which is in actual the transfer source of the tagged packet) specified by the outlet port number 211. As described in the description on the operation of the downward transfer control unit 133D, since the re-processing indication is set "on", the tagged packet is transferred to the upward transfer control unit 1334. The processes of Figs. 17 and 15 are executed to perform the upward transfer process again.

### (4) IP packet processing and transfer of IP packet to control network by managing unit

In the function (3), when the transfer destination is specified to the (number of the internal switch port 139) of the managing unit 131, the tagged packet is transferred to the managing unit 131. It is obvious that the software of the managing unit, for example, the functional software indicated by 551 enables to perform any processing against the tagged packet. Further, it is possible to easily analogize the transfer of the processed or unprocessed IP packet in the tagged packet to the system administration managing function 51, the service managing function 52 and the network control function 53 through the control network 16. Conversely, it is also possible to easily analogize the storage of the IP packet received from the system administration managing function 51, the service managing function 52 and the network control function 53 in the tagged packet and the transfer of that tagged packet to the managing unit 131 and the service processing unit 132.

### (5) Data processing in the external service processing unit 134

The external service processing unit 134 disables to directly transmit and receive the tagged packet. Hence, the upward transfer processing unit 1334 brings about a processing request ("interrupt") to the CPU 1339 with respect to the target IP packet. Then, the software program run on the CPU 1339 operates to create the data packet corresponding to the tagged packet 21 and then encapsulate the data (IP in IP). Then, the destination IP address and the transmission source IP address are transferred to the transfer processing unit of the downward direction with the IP addresses of the external service processing unit 134 and the automatic transfer processing unit 133 of the transfer destination being set. This results in allowing the data packet to be transferred to the external service processing unit 134. The data processing against the encapsulated packet in the external service processing unit is likewise to the foregoing function (2). When the data packet is returned from the external service processing unit to the transfer processing unit 133 of the transmission source, like the function (2), it is merely necessary to create the IP in IP packet with the IP addresses of the destination and the source replaced with each other and then transmit it.

The foregoing description makes it possible to realize the communication node that provides the packet transfer function to be QoS-guaranteed as well as the packet data processing function.

### [Dynamic downloading function]

Inside the communication node 133, the foregoing packet transfer and data processing function and the basic software functions 5511, 5531 and 5521 of Fig. 28 are served to freely transfer and download any program and data like control information.

### [Description on the embodiment of reserving and setting QoS-guaranteed path]

In the following, the description will be oriented to how the QoS-guaranteed path setting is reserved and how the QoS-guaranteed path is set on a start time and released on an end time.

In the reserved system resource managing function 531, the availability determining function 5311 operates to accept the request for reserving the network resource from the communication node control function 55, the ES application function 54 and the service managing function 52 through the lines 58, 63 and 62A and determine if the request source can issue the request on the basis of the qualification information of the request source (user) and the reserve accepting policy information obtained by accessing the USB 518 and the PDB 519. Herein, the request for reserving the network resource is, for example, a request in which "between the ES 14 (noted as X) and the ES 14 (noted as Y), a bandwidth (Z) is secured between a start time (V) and an end time (W). The secured bandwidth is applied to the IP packet flow (F)."

Next, the domain border determining function 5312 operates to determine whether or not the network resource belonging to another domain exists in the requested network resource on the basis of the in-domain/inter-domain network component information sent from the current & future resource information managing function 51C. If yes, the function 5312 requests the inter-organization arbitrating function 535 to reserve the inter-domain network resource. For example, this is the case in which "between the ES 14 (noted as X) and the ES 14 (noted as Y), (Y) belongs to another network domain".

Then, (A) the reserved system resource reserving function 5313 operates to break the request for reserving the network resource into a set of "network resource elements" and then convert it into a request for reserving each "network resource element" on the basis of the in-domain network component information from the current & future resource information managing function 51C. The "network resource element" will be described later.

(B) The reserved system resource reserving function 5313 operates to enter the reserving information of the corresponding network resource element of the SRDB (Scheduled Resources DB) 5315, make access to the communication UDB 518 and PDB 519 of the network resource 5131, enter the qualification information of the request source (user) and the network resource allocating & reserving policy information, and determine whether or not the network resource element may be reserved (for example, whether or not the requested bandwidth amount can be secured in a requested time interval as to one line leading from the requested communication node to the next communication node) on the basis of these pieces of information.

(C) If not reserved, the function 5313 operates to enter the network resource element to be replaced from the SRDB 5315 and then perform the operation described in item (B).

(D) If it is determined that all the "network resource elements" composing the request for reserving the network resource can be reserved, it means that the reservation is successful. Hence, the reserved resource registering function 5314 operates to reserve with respect to the SRDB 5315 the information corresponding to all the "network resource elements" (including the number of the communication node 13, the number of the transfer processing unit 133, the start time (V), the end time (W), the bandwidth (Z), the IP packet flow (F) qualification information, and so forth) and then to complete the reserving process. Herein, the network resource element will be described. For example, the "network resource" corresponds to the "end to end QoS-guaranteed path setting". The "network resource element" corresponds to the "QoS-guaranteed hop (QoS-guaranteed path portion of one line leading from the communication node to the next one)".

The reserved resource dispatch function 5341 operates to make access to the SRDB 5315, enter the corresponding information to the network resource element reaching the start time, and then request the communication node distributing function 5344 to transmit the information to the corresponding communication node control function 55. The software downloading function 5343 will be discussed below. The communication node distributing function 5344 operates to transmit the indication information required to set the QoS-guaranteed path to the resource indication relaying function 5514 of the communication node control function in response to that request. Likewise, the reserved source dispatch function 5341 operates to make access to the SRDB 5315, enter the corresponding information to the network resource element reaching the end time, delete the information for releasing the network resource element, and request the communication node distributing function 5344 to transmit the information to the corresponding communication node control function 55.

The communication node distributing function 5344 operates to transmit the indication information required for releasing the QoS-guaranteed path to the resource indication relaying function 5514 of the communication node control function. The resource indication relaying function 5514 of the communication node control function operates to notify the resource indication executing function 5523 of the indication information. The resource indicating executing function operates to perform the necessary settings to the hardware 5524 etc. on the basis of the indication, for example, the setting of the information to the upward and the downward pattern matching tables (13342, 133D2). By performing the foregoing process with respect to all the communication nodes leading from (X) to (Y), it is possible to realize on the administration policy or the like the service in which "between the ES 14 (noted as X) and the ES 14 (noted as Y), a bandwidth (Z) is secured between the start time (V) and the end time (W). The bandwidth to be secured is applied to the IP packet flow (F).

### [Description on the embodiment of reserving and executing the QoS-guaranteed type multi-point video conference service]

Then, the embodiment will be described with an example of a process of reserving the QoS-guaranteed type multi-point video conference. This is an example of the service to be carried out in combination of the QoS-guaranteed path setting and the data processing function. A convenor (X) enters into the service request distributing function 521 of the service managing function 52 the request in which "between three ES's 14 (noted as X, Y and Z), a video conference on video quality (Q) is held between the start time (V) and the end time (W)". The request is transferred to the service managing function 523 corresponding to the request.

The service managing function 523 operates to determine whether or not the convenor (X) can issue the request on the basis of the qualification information of (X) and the reservation accepting policy information obtained by accessing the UDB 518 and the PDB 519. Further, the request condition of "the video conference on the video quality (Q)" is broken into the request information of the network resource to be secured, that is, "data processing software (S) for mixing pieces of the moving picture information from multi points and converting them into one piece of moving picture information", "computing resource (CPU performance, memory amount and so forth) required to execute the software (S)", and three "requests for setting the QoS-guaranteed paths (between X and S, Y and S and Z and S).

Herein, the "request for setting the QoS-guaranteed path" will be described in detail. This is a request in which "between X and S, a bandwidth (Z) is secured between the start time (V) and the end time (W). The secured bandwidth is applied to the IP packet flow (F) corresponding to the video conference application". Since the position of (S) is optimally selected by the reserved system resource managing function 531, at this stage, it is not set up. In addition, the amount of the bandwidth (Z) is determined by the video quality (Q), the video conference application, and the coding rules used by the data processing software (S). Hereafter, the information of the request for the network resource to be secured is completed and then the request information is transmitted to the reserved system resource managing function 531.

The process of the reserved system resource managing function 531 is the same as [the description on the embodiment of reserving and setting the QoS-guaranteed path] except the following points. (1) The SRDB 5315 includes the information such as ("the data processing software (S) for mixing pieces of moving picture information from the multi points and converting them into one piece of common moving picture information and the computing resource information required for executing the software (S) (including the number of the communication node 13, the number of the service processing unit 132 or the external service processing unit 134, an allocated CPU performance value, an allocated memory amount, and so forth) in addition to (the number of the communication node 13, the number of the transfer processing unit 133, the start time (V), the end time (W), the bandwidth (Z), the IP packet flow (F) ID information). Likewise, the CDB 51B and the current & future resource information managing function 51C have the same kind of information as the SRDB 5315. The CDB 51B stores the component information of the network resource and the future using plan (such as an available time interval) planned by a administration manager.

The current & future resource information managing function 51C operates to enter the content of the CDB 51B, the resource using status information periodically reported from the resource report executing function 5522 and the communication node managing information relaying function 5512 of each communication node control function 55, and the information from the line managing function 516. This makes it possible to respond the network resource element information passed from the current to the future to the inquiry given through the line 604. The network resource element information includes a data processing software (S) service processing unit 132 to be used by each communication node, a CPU performance value of the external service processing unit 134, a memory amount, and so forth.

The reserved system resource managing function 531 operates to enter the foregoing information and then select the execution position (the service processing unit 132 and the external service processing unit 134 of a certain communication node) candidate of "the data processing software (S) of mixing pieces of moving picture information from the multi points and converting them into one piece of common moving picture information", and convert the candidate into three "requests for setting the QoS-guaranteed path" (between X and S, Y and S and Z and S). Then, the function 531 performs the same process as that of the foregoing [description on the embodiment where the QoS-guaranteed path is reserved and set]. Of all the candidates, the resource to be allocated is determined on the basis of the administration policy in which the value of the PDB 519, for example, the candidate in which the smallest number of communication nodes are provided is selected. Or, the candidate to be selected is that the availability of the bandwidth of the using line or the resources of the service processing unit 132 and the external service processing unit 134 are averaged.

The reserved resource registering function 5314 operates to register in the SRDB the allocated information (including the number of the communication node 13, the number of the transfer processing unit 133, the start time (V), the end time (W), the bandwidth (Z), and the IP packet flow (F) ID) and the information including (the data processing software (S) for mixing pieces of the moving picture information from the multi points and converting them into one piece of common moving picture information and the computing resource information required for executing the software (S) (including the number of the communication node 13, the number of the service processing unit 132 or the external service processing unit 134, the allocated CPU performance value, the allocated memory amount, and so forth).

The reserved resource dispatch function 5341 operates to make access to the SRDB 5315 and enter the corresponding information to the network resource element reaching the start time of use and then request the communication node distributing function 5344 to transmit the information to the corresponding communication node control function 55. Further, the function 5341 is also served to notify the software downloading function 5343 of the information including "the data processing software (S) for mixing pieces of moving picture information from the multi points and converting them into one piece of common moving picture information and the computing resource information required for executing the software (S) (including the number of the communication node 13, the number of the service processing unit 132 or the external service processing unit 134, the allocated CPU performance value, the allocated memory amount, and so forth)" and then entrust the downloading function 5343 to download the software(s).

The software downloading function 5343 operates to obtain the software (S) from the SDB 603 and notify the communication node distributing function 5344 of the information composed of "the data processing software (S) for mixing pieces of moving picture information from multi points and converting them into one piece of common moving picture information and the computing resource information required for executing the software (S) (including the number of the communication node 13, the number of the service processing unit 132 or the external service processing unit 134, an allocated CPU performance value, an allocated memory amount, and so forth)" and then to request the function 5344 to transmit the information to the concerned communication node. The distributing function 5344 operates to transmit the indication information required for the QoS-guaranteed type multi-point video conference service to the resource indication relaying function 5514 included in the communication node control function in response to the request given from the software downloading function 5343.

Likewise, the reserved resource dispatch function 5341 operates to make access to the SRDB 5315, enter the corresponding information to the network resource element reaching the end time of use, and request the communication node distributing function 5344 to transmit the information to the corresponding communication node control function 55. In response, the distributing function 5344 operates to transmit the QoS-guaranteed path release, the data processing software (S), and the indication information required for releasing the computing resource release required for executing the software (S) to the resource indication relaying function 5514 included in the communication node control function. The resource indication relaying function 5514 of the communication node control function operates to notify the resource indication executing function 5523 of the indication information. The resource indication executing function operates to execute the necessary settings of the hardware and the like in response to the indication. The transfer of the software (S) from the resource indication executing function 5523 to the service processing unit 132 or the external service processing unit 134 has been already described.

As described above, by reserving, setting and starting, or releasing three components of "the request for setting the QoS-guaranteed path", "the data processing software (S) for mixing pieces of moving picture information from the multi points and converting them into one piece of common moving picture information", and "the computing resource (the CPU performance, the memory amount, and so forth)" between the X and the S, the Y and the S, and the Z and the S over all the network, it is possible to dynamically provide the service in which among three ES's 14 (noted as X, Y and Z), between the start time (V) and the end time (W), the video conference with the video quality (Q) is held by a convenor (X)." as well as perform the optimal resource management (such as reserving of the QoS-guaranteed path and the video conference supporting function) based on the administration policy in response to this type of service request required to have different kinds of resources of the communication and the data processing.

### [Description on the embodiment in which the prompt setting of the QoS-guaranteed path]

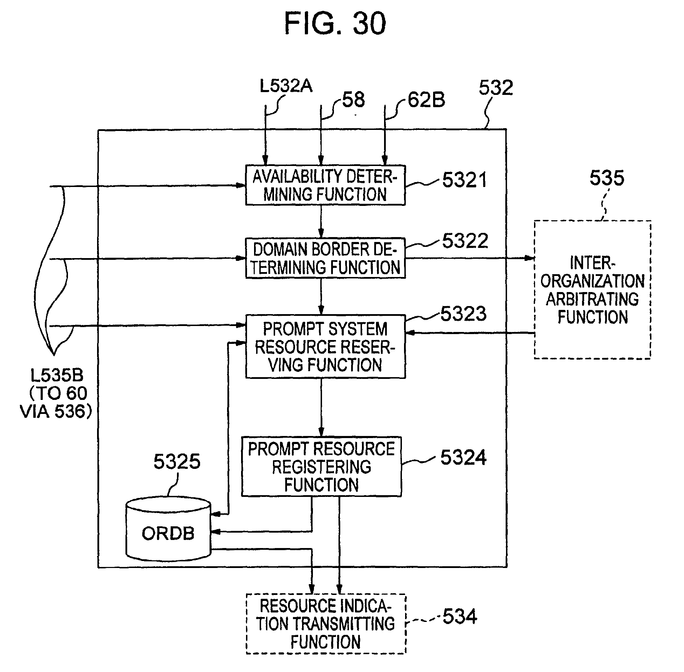

Fig. 30 shows an arrangement of the prompt system resource managing function 532. The prompt system resource managing function 532 is arranged to have an availability determining function 5321, a domain border determining function 5322, a prompt system resource reserving function 5323, a prompt resource registering function 5324, and an ORDB (On-demand Resources Database) 5325 accessed by the function 5324.

In the following, as an example, the process of promptly setting or releasing the QoS-guaranteed path will be described. In the prompt system resource managing function 532 operates to accept the network resource prompt request from the communication node control function 55, the ES application function 54, and the service managing function 52 through the lines L532A, 58 and 62B and to determine if the request source enables to issue the request by accessing the UDB 518 and the PDB 519 on the basis of the qualification information of the request source (user) and the reservation accepting policy information. Herein, the network resource prompt request is, for example, reserving of a bandwidth (Z) between the ES 14 (noted as X) and the ES 14 (noted as Y).

It is a request of "applying the bandwidth to be secured into the IP packet flow (F)". Then, the domain border determining function 5322 operates to determine if the network resource belonging to another domain exists in the requested network resource on the basis of the in-domain/inter-domain network configuration information from the current & future resource information managing information 51C. If yes, the function 5322 operates to request the inter-organization arbitrating function 535 to reserve the inter-domain network resource. For example, this is the case in which between the ES 14 (noted as X) and the ES 14 (noted as Y), (Y) belongs to another network domain."

Then, (A) the prompt system resource reserving function 5323 operates to break the prompt request for the network resource into a set of "network resource elements" and convert the set into a prompt request for each "network resource element" on the basis of the in-domain network configuration information from the current & future resource information managing function 51C.

(B) The prompt system resource reserving function 5323 operates to enter the using information of the corresponding network resource element in the ORDB (On-demand Resources DB) 5325 at each request of "reserving the network resource element". Further, the reserving function 5323 operates to enter the using information of the corresponding network resource element in the ORDB (On-demand Resources DB) 5325, and access the communication UDB 518 and the PDB 519 of the network resource 5313, and then enter the qualification information of the request source (user) and the network resource allocation & reservation policy information. Based on these informations, it is determined whether or not the prompt allocation of the resource element is enabled (for example, whether or not the requested bandwidth amount can be secured at this time as to one line leading from the requested communication node to the next communication node).

(C) If not secured, the network resource element to be replaced therewith is entered from the ORDB 5325 and then the function (B) is executed.

(D) If it is determined to promptly secure all the "network resource elements" composing the prompt request for the network resource, the prompt allocation is successful. The prompt resource registering function 5324 operates to register in the ORDB 5325 the corresponding information (including the number of the communication node 13, the number of the transfer processing unit 133, the bandwidth (Z), and the IP packet flow (F) ID information) corresponding to all the "network resource elements" and then notify the prompt resource dispatch function 5342 of Fig. 29 of the prompt setting request and complete the prompt allocation. The prompt resource dispatch function 5342 operates to access the ORDB 5325 and enter the corresponding information to the network resource element to which the prompt setting request is noticed. Then, the function 5342 operates to request the communication node distributing function 5344 to transmit the information to the corresponding communication node control function 55.

The distributing function 5344 operates to transmit the indication information required for setting the QoS-guaranteed path to the resource indication relaying function 5514 of the communication node control function in response to the request.

The relaying function 5514 operates to notify the resource indication executing function 5523 of the indication information. In response, the resource indication executing function operates to perform the settings to the necessary hardware 5524 such as setting of information to the upward and the downward pattern matching tables (13342, 133D2).

By performing the foregoing process as to all the communication nodes leading from (X) to (Y), it is possible to realize the service in which "between the ES 14 (noted as X) and the ES 14 (noted as Y), the bandwidth (Z) is secured. The secured bandwidth is applied to the IP packet flow (F)" on the basis of the administration policy.

Like the "prompt release of the QoS-guaranteed path", when the request in which "the bandwidth (Z) secured between the ES 14 (noted as X) and the ES 14 (noted as Y) is released" is entered into the availability determining function 5321, the analogous process to the prompt setting of the QoS-guaranteed path is executed. Then, the corresponding information (the number of the communication node 13, the number of the transfer processing unit 133, the bandwidth (Z), the IP packet flow (F) ID information, and so forth) to all the "network resource elements" in use is entered into the ORDB 5325. Then, the prompt release request is notified to the prompt resource dispatch function 5342. Further, the corresponding information (the number of the communication node 13, the number of the transfer processing unit 133, the bandwidth (Z), the IP packet flow (F) ID information, and so forth) to all the "network resource elements" in use is deleted from the ORDB 5325. The subsequent prompt releasing process in the communication node 13 is the same as the process of the reserved system resource management. Hence, it is left out.

Hereafter, like the reserved system, as to the function of setting the prompt system QoS-guaranteed path, the service is realized on the administration policy and the like.

### [Description on the embodiment in which the QoS-guaranteed type multi-point video conference service is promptly executed]

Next, the description will be oriented to the embodiment in which the QoS-guaranteed multi-point video conference is promptly executed as an example of the prompt service in the combination of the QoS-guaranteed path setting and the data processing function. It is obvious from the foregoing description that when the convenor (X) enters in the service request distributing function 521 of the service managing function 52 the request in which "among the three ES's 14 (noted as X, Y and Z), the video conference with the video quality (A) is held by the convenor (X)", the analogous process to the foregoing reserved system is carried out, the request is notified to the prompt system resource managing function 532, and finally the service is promptly provided.

### [Description on the embodiment of the function of reserving a network resource over the organizations]

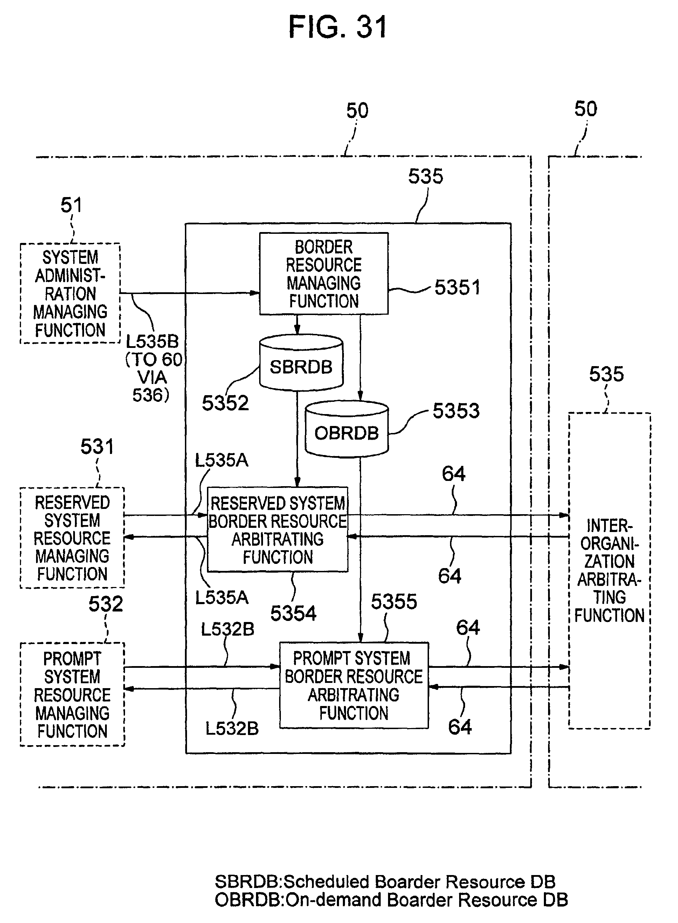

Fig. 31 shows an arrangement of the inter-organization arbitrating function 535. The inter-organization arbitrating function 535 is arranged to have a border resource managing function 5351, a SBRDB (Scheduled Boarder Resources Database) 5352 and an OBRDB (On-demand Boarder Resources Database) 5353 accessed by the function 5351, a reserved system border resource arbitrating function 5354, and a prompt system border resource arbitrating function 5355.

Fig. 31 shows the processing sequence of the inter-organization arbitrating function 535. The function will be described in detail with an example of the reserved system border resource arbitrating function 5354. In the portion denoted by 90, three communication lines L13 are located between two network domains 10. As denoted by 91, the reserved system border resource arbitrating function 5354 of each network domain 10 negotiates with the counterpart. The reserved system border resource arbitrating function 5345 that has accepted the request for setting the QoS-guaranteed path to the ES 14 (Y) operates to enter three available lines L13 A, B and C between the network domain 10 to which (Y) belongs and the local network domain 10 by accessing the SBRDB 5352.

The SBRDB is created from the information sent from the PDB 519 of the system administration management and the current & future resource information managing function 51C by the border resource managing function 5351. In the process (1) of the portion 91, the reserved system border resource arbitrating function 5345 operates to create the list of all the border resources with the priority of the local domain. As a result, C > B > A is given in the sequence of higher allocation priority. In the process (2), this information is exchanged. The relation of A > C > B is sent from the reserved system border resource arbitrating function 5345 of another network domain. The sequence between the arbitrating function 5345 of another network domain and the domain border determining function 5312 is left out. In the process (3), the weighted path common list is created from the information to be exchanged with each other. That is, the points of 3, 2 and 1 are allocated in the sequence of higher priority and the sum of both is calculated. In this embodiment, A = 4, B = 3 and C = 5 are given and C > A > B is the result of the process (3). In the processes (4) and (5), it is determined if the QoS-guaranteed path in the network domain can be set to the reserved system resource reserving function 5313 when C, A and B are used. If yes, the priority sequence is required. In the process (6), the reserved system resource reserving function 5313 operates to give back the result to the request (5). In the process (7), the reserved system border resource arbitrating functions 5345 of both network domains operate to exchange their lists with each other. In the process (8), the final result (B) can be obtained and then notified to the reserved system resource reserving function 5313. The foregoing process makes it possible to set the QoS-guaranteed path over plural organizations. This holds true to the prompt system. The process of the prompt system may be easily analogized from the foregoing description.

### INDUSTRIAL APPLICABILITY

As described above, the present invention makes it possible to reduce the administration cost, the performance and the service level on the communication network.

More concretely,
(1) A router (called a communication node) having means of processing data may be provided so that the fire-wall function and the coding rule conversion of the moving picture information in real time can be executed in the communication node. Conventionally, it has been realized by another server device. If the server device to be used with the QoS-guaranteed communication path connecting one end with another end is located in a different location, the optimal communication path cannot be used. The present invention provides a function realized by the server device on the communication node located on the QoS-guaranteed communication path, thereby reducing the administration cost and improving the performance.
(2) The programmable network according to the invention makes it possible to quickly provide the new service, thereby reducing the administration cost and improving the service level.
(3) The QoS-guaranteed communication path can be set between the ends on the basis of the administration policy. As to the setting, the reserved type setting with the using time interval specified and the prompt type setting for promptly responding to the setting request are both made possible, thereby reducing the administration cost and improving the service level.
(4) The present invention enables to set the QoS-guaranteed communication path over plural managing organizations (domains), thereby improving the flexibility of administration and the service level.
(5) The present invention makes it possible to optimally manage the resources (for example, secure the QoS-guaranteed path and the video conference supporting function) in response to the service request for requiring different kinds of resources of the data processing and the communication like the QoS-guaranteed type video conference service.

## Claims

1. A network system connected with a plurality of network domains, each of said domains configured of a communication node that enables to transfer an IP packet and process data, a network management system, a control server, and a plurality of end systems, **characterized in that**:
said end system located in any one of said network domains operates to transmit to said communication node a communication request in which the communication quality is guaranteed to another network domain, said communication node having received said communication request operates to request a request for setting a communication path between said network domains to said network management system, said network management system operates to determine if a network resource exists in said another network domain corresponding to the request for setting the communication path, if yes, arbitrate said local network with said another network domain, and set the communication path in which the communication quality is guaranteed over both of said network domains.

2. A network system as claimed in claim 1, wherein said network management system having received the communication request in which the communication quality is guaranteed to said another network domain by said communication node operates to determine if a network resource exists in said another network domain in response to said communication request, based on the qualification information of a request source having issued said communication request and a network resource allocating policy.

3. A network system as claimed in claim 2, wherein said network management system includes means of downloading control software required for processing data, said control software to be transferred through said communication path set by said communication request and may provide a multi-point video conference service on said communication path in which the communication quality is guaranteed.

4. A network system as claimed in claim 2, wherein if the communication request from said communication node indicates reservation of a network resource between said network domains, said network management system operates to break the network resource request received from said communication node into a set of network resource elements, convert said request into a set of request for reserving each network resource element, enter the reserving information of the corresponding network resource element for each converted reserving request, and determine if said network resource element can be reserved on the basis of the qualification information of a request source having issued said reserving request and network resource allocating information.

5. A network system as claimed in claim 5, wherein the determination as to whether or not said reservation is enabled is carried out by determining if a requested bandwidth can be secured in a required timing as to one line leading from the requested communication node to the next communication node on the communication path.

6. A network system as claimed in claim 4, wherein said reserving request is composed of two types of requests, the request for reservedly setting a communication path in which the communication quality is guaranteed and the other request for promptly setting said communication path.

7. In a network system connected with a plurality of network domains, each of said domains configured of a communication node that enables to transfer an IP packet and process data, a network management system, a control server and a plurality of end systems, said communication node **characterized by** including means of matching patterns of packet headers, means of transferring said packet to another communication node, and means of processing data of said received packet.
